# EUROPEAN PATENT APPLICATION

(11) **EP 4 376 513 A1**
(43) Date of publication of application: **29.05.2024**
(21) Application number: 23765136.9
(22) Date of filing: 25.07.2023
(51) Int. Cl.: H04W 68/00, H04W 24/08, H04W 76/16, H04W 76/27, H04W 88/06

(54) **ELECTRONIC DEVICE FOR PROHIBITING OPERATION OF MEASURING QUALITY OF SIGNAL ON BASIS OF PAGING MESSAGE, AND OPERATION METHOD OF ELECTRONIC DEVICE**

(30) Priority: 28.09.2022 KR 20220123497; 11.10.2022 KR 20220130040
(71) Applicant: Samsung Electronics Co., Ltd., Suwon-si, Gyeonggi-do 16677 (KR)
(72) Inventor: LEE, Kyunghoon, Suwon-si, Gyeonggi-do 16677 (KR); KIM, Dongho, Suwon-si, Gyeonggi-do 16677 (KR)
(74) Representative: Arnold & Siedsma
(86) International application number: PCT/KR2023/010777
(87) International publication number: WO 2024/071621

(57) **Abstract**

According to various embodiments, an electronic device and a method for operating the electronic device are provided. The electronic device may include: a communication processor configured to transmit or receive data to or from a network through a cellular communication; and a communication circuit, wherein the communication processor is configured to: receive, from the network, a paging message including an indicator indicating a service type for transmission or reception of the data, enter a radio resource control (RRC) connected state and be connected with a node supporting dual connectivity (DC) in case of receiving the paging message, receive a measurement object related to another node different from a node connected with the electronic device in the RRC connected state, and control the communication circuit to prevent measurement of a quality of a signal being broadcasted by the other node based on the measurement object in response to identification of coincidence of a service type included in the indicator and a predetermined first service type with each other. Other various embodiments are possible.

## Description

### [Technical Field]

The present disclosure relate to an electronic device and a method for operating the electronic device, and relate to technology to prevent measurement of a quality of a signal based on a paging message.

### [Background Art]

To meet the increasing demand for wireless data traffic since the deployment of 4G communication systems, efforts have been made to develop an improved 5G or pre-5G communication system. Therefore, the 5G or pre-5G communication system is also called a "beyond 4G network" communication system or a "post Long-Term Evolution (LTE) system." Implementation of the 5G communication system in ultrahigh frequency (mmWave) bands (e.g., not less than 6 GHz bands) in addition to the bands (e.g., not more than 6 GHz bands) used in LTE is being considered in order to accomplish higher data rates. For 5G communication systems, beamforming, massive multiple-input multiple-output (massive MIMO), full dimensional MIMO (FD-MIMO), array antenna, analog beamforming, and large scale antenna techniques are being discussed.

The 5G mobile communication system may support multi-RAT-dual-connectivity (MR-DC) for transmitting or receiving data to or from a base station for the 4G cellular communication and a base station for the 5G cellular communication.

### [Disclosure of Invention]

### [Technical Problem]

An electronic device supporting MR-DC may be connected with two nodes based on the control of a cellular network, and transmit or receive data. According to an embodiment, the electronic device supporting the MR-DC may be connected with a first node that supports a first cellular communication and a second node that supports a second cellular communication, and may perform data transmission and/or reception through the first cellular communication and the second cellular communication. Since the electronic device that supports the MR-DC performs data communication by using both the first cellular communication and the second cellular communication, it is possible for the electronic device that supports the MR-DC to implement relatively high transmission speed and reception speed.

However, the electronic device that supports the MR-DC may perform a service capable of performing data transmission and/or reception through a master node. According to an embodiment, in order to perform a voice call and/or video call, the electronic device may release a connection with a secondary node in a state where the electronic device is connected with both a master node and the secondary node, and may transmit and/or receive data related to the video call and/or the voice call through the master node.

The electronic device that supports the MR-DC may be switched from an Radio Resource Control (RRC) idle state to an RRC connected state as it receives a paging message due to reception of the voice call and/or the video call in the RRC idle state. As being switched to the RRC connected state, the electronic device that supports the MR-DC may receive a measurement object from the cellular network, and may perform quality measurement of a signal using the measurement object. The electronic device that supports the MR-DC may be configured to transmit a measurement report including the measurement result to the cellular network, and thus the electronic device may be connected with the secondary node. However, the electronic device may be released from the secondary node again due to the reception of the voice call and/or the video call.

That is, although being not required to be connected with the secondary node, the electronic device may be unnecessarily connected with the secondary node by performing a quality measurement operation for connection with the secondary node and a measurement report operation including the measurement result, and as the electronic device is unnecessarily connected with the secondary node, unnecessary power consumption may occur.

### [Solution to Problem]

An electronic device according to an embodiment of the present disclosure may include a communication processor configured to transmit and/or receive data to and/or from a network through a cellular communication. The electronic device may include a communication circuit. The communication processor may be configured to receive, from the network, a paging message including an indicator indicating a service type for transmission or reception of the data. The communication processor may be further be configured to, in reaction to receival of the paging message, enter a radio resource control (RRC) connected state, and may be configured to connect with a node that supports dual connectivity (DC). The communication processor in the RRC connected state may be configured to receive a measurement object related to another node different from a node connected with the electronic device. The communication processor may be configured to control the communication circuit to prevent measurement of a quality of a signal being broadcasted by the other node based on the measurement object in response to identification of coincidence of a service type included in the indicator and a predetermined first service type with each other.

A method for operating an electronic device according to an embodiment of the present disclosure may include receiving, from a network, a paging message including an indicator indicating a service type for transmission or reception of data. The method for operating an electronic device may include entering a radio resource control (RRC) connected state, and may be connecting with a node that supports dual connectivity (DC) if the paging message is received. The method for operating an electronic device may include receiving a measurement object related to another node different from a node connected with the electronic device in the RRC connected state. The method for operating an electronic device may include preventing measurement of a quality of a signal being broadcasted by the other node based on the measurement object in response to identification of coincidence of a service type included in the indicator and a predetermined first service type with each other.

### [Advantageous Effects of invention]

The electronic device and the method for operating the electronic device according to an embodiment of the disclosure may identify the service type included in the paging message, and may prevent (or, release) the measurement of the quality of the signal being broadcasted by the other node different from the connected node in case that the identified service type is the same as the designated service type. By not measuring the quality of the signal, the measurement report including the measurement result of the quality may not be required to be transmitted, and thus the connection with an unnecessary node may be prevented, thereby reducing the power consumption of the electronic device and the complexity of the network.

The electronic device and the method for operating the electronic device according to an embodiment of the present disclosure may identify the service type included in the paging message, and may select some of the received measurement objects in case that the identified service type is the same as the designated service type. Since the electronic device selects the measurement object capable of smoothly performing the service, and reports the signal quality measurement and the measurement result, it is possible to implement quick connection between the node capable of smoothly performing the service and the electronic device. Accordingly, the electronic device can improve the quality of the service.

### [Brief Description of Drawings]

FIG. 1 is a block diagram of an electronic device according to various embodiments of the disclosure.
FIG. 2 is a block diagram of an electronic device for supporting legacy network communication and 5G network communication according to various embodiments.
FIG. 3 is a diagram illustrating a protocol stack structure of a network 100 of legacy communication and/or 5G communication according to an embodiment.
FIGS. 4A, 4B, and 4C are diagrams illustrating wireless communication systems providing a network of legacy communication and/or 5G communication according to various embodiments.
FIG. 5A is a diagram illustrating an electronic device and a cellular network according to an embodiment.
FIG. 5B is a diagram illustrating an embodiment in which an electronic device according to an embodiment performs call connection.
FIG. 5C is a diagram illustrating an embodiment in which call connection has failed in an electronic device according to an embodiment.
FIG. 6 is a block diagram of an electronic device according to an embodiment.
FIG. 7A is a diagram illustrating an embodiment in which an electronic device according to an embodiment prevents measurement of a quality based on a measurement object when an indicator included in a paging message satisfies a designated service type.
FIG. 7B is a diagram illustrating an embodiment in which an electronic device according to an embodiment prevents measurement of a quality based on a measurement object when an indicator included in a paging message satisfies a designated service type.
FIG. 7C is a diagram illustrating an embodiment in which an electronic device according to an embodiment prevents measurement of a quality based on a measurement object when an indicator included in a paging message satisfies a designated service type.
FIG. 8 is a diagram illustrating an embodiment in which an electronic device according to an embodiment prevents measurement of a quality based on a measurement object in case that a service type included in a paging message is the same as a predetermined service type.
FIG. 9A is a diagram illustrating an embodiment in which an electronic device according to an embodiment identifies a measurement object satisfying a condition related to a bandwidth and performs measurement of a quality in case that a service type included in a paging message is the same as a predetermined second service type.
FIG. 9B is a diagram illustrating an embodiment in which an electronic device according to an embodiment identifies a measurement object satisfying a condition related to an SCS and performs measurement of a quality in case that a service type included in a paging message is the same as a predetermined third service type.
FIG. 10 is an operational flowchart illustrating a method for operating an electronic device.

### [Mode for the Invention]

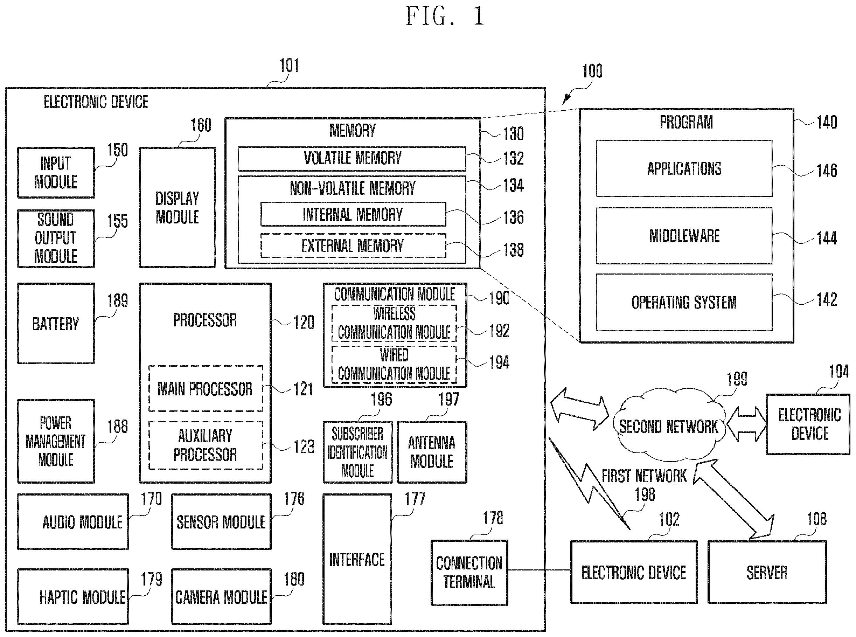

FIG. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input 1module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

The sound output 1module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display 1module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultralow-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

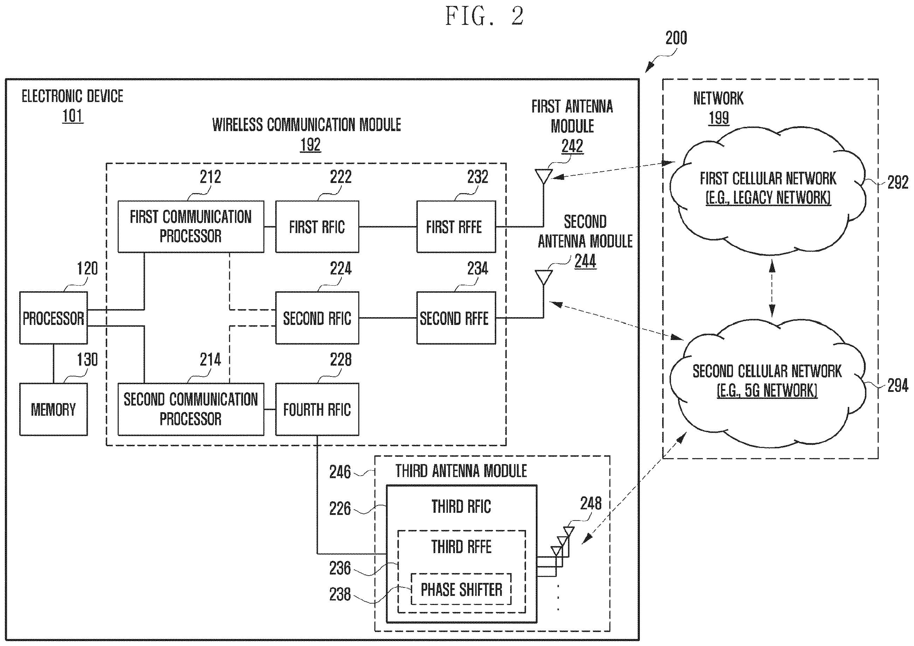

FIG. 2 is a block diagram illustrating an electronic device in a network environment including a plurality of cellular networks according to an embodiment of the disclosure. Referring to FIG. 2, the electronic device 101 may include a first communication processor 212, second communication processor 214, first RFIC 222, second RFIC 224, third RFIC 226, fourth RFIC 228, first radio frequency front end (RFFE) 232, second RFFE 234, first antenna module 242, second antenna module 244, and antenna 248. The electronic device 101 may include a processor 120 and a memory 130. A second network 199 may include a first cellular network 292 and a second cellular network 294. According to another embodiment, the electronic device 101 may further include at least one of the components described with reference to FIG. 1, and the second network 199 may further include at least one other network. According to one embodiment, the first communication processor 212, second communication processor 214, first RFIC 222, second RFIC 224, fourth RFIC 228, first RFFE 232, and second RFFE 234 may form at least part of the wireless communication module 192. According to another embodiment, the fourth RFIC 228 may be omitted or included as part of the third RFIC 226.

The first communication processor 212 may establish a communication channel of a band to be used for wireless communication with the first cellular network 292 and support legacy network communication through the established communication channel. According to various embodiments, the first cellular network may be a legacy network including a second generation (2G), 3G, 4G, or long term evolution (LTE) network. The second communication processor 214 may establish a communication channel corresponding to a designated band (e.g., about 6 GHz to about 60 GHz) of bands to be used for wireless communication with the second cellular network 294, and support fifth generation (5G) network communication through the established communication channel. According to various embodiments, the second cellular network 294 may be a 5G network defined in 3rd generation partnership project (3GPP). Additionally, according to an embodiment, the first communication processor 212 or the second communication processor 214 may establish a communication channel corresponding to another designated band (e.g., about 6 GHz or less) of bands to be used for wireless communication with the second cellular network 294 and support 5G network communication through the established communication channel. According to one embodiment, the first communication processor 212 and the second communication processor 214 may be implemented in a single chip or a single package. According to various embodiments, the first communication processor 212 or the second communication processor 214 may be formed in a single chip or a single package with the processor 120, the auxiliary processor 123, or the communication module 190.

Upon transmission, the first RFIC 222 may convert a baseband signal generated by the first communication processor 212 to a radio frequency (RF) signal of about 700 MHz to about 3 GHz used in the first cellular network 292 (e.g., legacy network). Upon reception, an RF signal may be obtained from the first cellular network 292 (e.g., legacy network) through an antenna (e.g., the first antenna module 242) and be preprocessed through an RFFE (e.g., the first RFFE 232). The first RFIC 222 may convert the preprocessed RF signal to a baseband signal so as to be processed by the first communication processor 212.

Upon transmission, the second RFIC 224 may convert a baseband signal generated by the first communication processor 212 or the second communication processor 214 to an RF signal (hereinafter, 5G Sub6 RF signal) of a Sub6 band (e.g., 6 GHz or less) to be used in the second cellular network 294 (e.g., 5G network). Upon reception, a 5G Sub6 RF signal may be obtained from the second cellular network 294 (e.g., 5G network) through an antenna (e.g., the second antenna module 244) and be pretreated through an RFFE (e.g., the second RFFE 234). The second RFIC 224 may convert the preprocessed 5G Sub6 RF signal to a baseband signal so as to be processed by a corresponding communication processor of the first communication processor 212 or the second communication processor 214.

The third RFIC 226 may convert a baseband signal generated by the second communication processor 214 to an RF signal (hereinafter, 5G Above6 RF signal) of a 5G Above6 band (e.g., about 6 GHz to about 60 GHz) to be used in the second cellular network 294 (e.g., 5G network). Upon reception, a 5G Above6 RF signal may be obtained from the second cellular network 294 (e.g., 5G network) through an antenna (e.g., the antenna 248) and be preprocessed through the third RFFE 236. The third RFIC 226 may convert the preprocessed 5G Above6 RF signal to a baseband signal so as to be processed by the second communication processor 214. According to one embodiment, the third RFFE 236 may be formed as part of the third RFIC 226.

According to an embodiment, the electronic device 101 may include a fourth RFIC 228 separately from the third RFIC 226 or as at least part of the third RFIC 226. In this case, the fourth RFIC 228 may convert a baseband signal generated by the second communication processor 214 to an RF signal (hereinafter, an intermediate frequency (IF) signal) of an intermediate frequency band (e.g., about 9 GHz to about 11 GHz) and transfer the IF signal to the third RFIC 226. The third RFIC 226 may convert the IF signal to a 5G Above 6RF signal. Upon reception, the 5G Above 6RF signal may be received from the second cellular network 294 (e.g., a 5G network) through an antenna (e.g., the antenna 248) and be converted to an IF signal by the third RFIC 226. The fourth RFIC 228 may convert an IF signal to a baseband signal so as to be processed by the second communication processor 214.

According to one embodiment, the first RFIC 222 and the second RFIC 224 may be implemented into at least part of a single package or a single chip. According to one embodiment, the first RFFE 232 and the second RFFE 234 may be implemented into at least part of a single package or a single chip. According to one embodiment, at least one of the first antenna module 242 or the second antenna module 244 may be omitted or may be combined with another antenna module to process RF signals of a corresponding plurality of bands.

According to one embodiment, the third RFIC 226 and the antenna 248 may be disposed at the same substrate to form a third antenna module 246. For example, the wireless communication module 192 or the processor 120 may be disposed at a first substrate (e.g., main PCB). In this case, the third RFIC 226 is disposed in a partial area (e.g., lower surface) of the first substrate and a separate second substrate (e.g., sub PCB), and the antenna 248 is disposed in another partial area (e.g., upper surface) thereof; thus, the third antenna module 246 may be formed. By disposing the third RFIC 226 and the antenna 248 in the same substrate, a length of a transmission line therebetween can be reduced. This may reduce, for example, a loss (e.g., attenuation) of a signal of a high frequency band (e.g., about 6 GHz to about 60 GHz) to be used in 5G network communication by a transmission line. Therefore, the electronic device 101 may improve a quality or speed of communication with the second cellular network 294 (e.g., 5G network).

According to one embodiment, the antenna 248 may be formed in an antenna array including a plurality of antenna elements that may be used for beamforming. In this case, the third RFIC 226 may include a plurality of phase shifters 238 corresponding to a plurality of antenna elements, for example, as part of the third RFFE 236. Upon transmission, each of the plurality of phase shifters 238 may convert a phase of a 5G Above6 RF signal to be transmitted to the outside (e.g., a base station of a 5G network) of the electronic device 101 through a corresponding antenna element. Upon reception, each of the plurality of phase shifters 238 may convert a phase of the 5G Above6 RF signal received from the outside to the same phase or substantially the same phase through a corresponding antenna element. This enables transmission or reception through beamforming between the electronic device 101 and the outside.

The second cellular network 294 (e.g., 5G network) may operate (e.g., stand-alone (SA)) independently of the first cellular network 292 (e.g., legacy network) or may be operated (e.g., non-standalone (NSA)) in connection with the first cellular network 292. For example, the 5G network may have only an access network (e.g., 5G radio access network (RAN) or a next generation (NG) RAN and have no core network (e.g., next generation core (NGC)). In this case, after accessing to the access network of the 5G network, the electronic device 101 may access to an external network (e.g., Internet) under the control of a core network (e.g., an evolved packed core (EPC)) of the legacy network. Protocol information (e.g., LTE protocol information) for communication with a legacy network or protocol information (e.g., new radio (NR) protocol information) for communication with a 5G network may be stored in the memory 130 to be accessed by other components (e.g., the processor 120, the first communication processor 212, or the second communication processor 214).

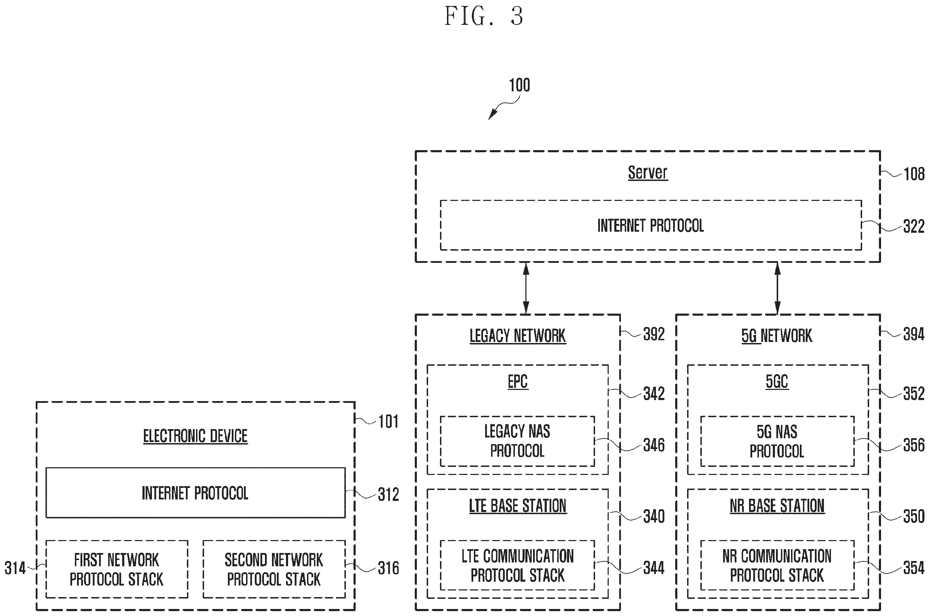

FIG. 3 illustrates a protocol stack structure of the network 100 of legacy communication and/or 5G communication according to an embodiment.

Referring to FIG. 3, the network 100 according to an illustrated embodiment may include the electronic device 101, a legacy network 392, a 5G network 394, and the server 108.

The electronic device 101 may include an Internet protocol 312, a first communication protocol stack 314, and a second communication protocol stack 316. The electronic device 101 may communicate with the server 108 through the legacy network 392 and/or the 5G network 394.

According to an embodiment, the electronic device 101 may perform Interne communication associated with the server 108 through the Internet protocol 312 (for example, a TCP, a UDP, or an IP). The Internet protocol 312 may be executed by, for example, a main processor (for example, the main processor 121 of FIG. 1) included in the electronic device 101.

According to another embodiment, the electronic device 101 may perform wireless communication with the legacy network 392 through the first communication protocol stack 314. According to another embodiment, the electronic device 101 may perform wireless communication with the 5G network 394 through the second communication protocol stack 316. The first communication protocol stack 314 and the second communication protocol stack 316 may be executed by, for example, one or more communication processors (for example, the wireless communication module 192 of FIG. 1) included in the electronic device 101.

The server 108 may include an Internet protocol 322. The server 108 may transmit and receive data related to the Internet protocol 322 to and from the electronic device 101 through the legacy network 392 and/or the 5G network 394. According to an embodiment, the server 108 may include a cloud computing server existing outside the legacy network 392 or the 5G network 394. According to another embodiment, the server 108 may include an edge computing server (or a mobile edge computing (MEC) server) located inside at least one of the legacy network or the 5G network 394.

The legacy network 392 may include an LTE eNode B (eNB) 340 and an EPC 342. The LTE eNB 340 may include an LTE communication protocol stack 344. The EPC 342 may include a legacy NAS protocol 346. The legacy network 392 may perform LTE wireless communication with the electronic device 101 through the LTE communication protocol stack 344 and the legacy NAS protocol 346.

The 5G network 394 may include an NR gNB 350 and a 5GC 352. The NR gNB 350 may include an NR communication protocol stack 354. The 5GC 352 may include a 5G NAS protocol 356. The 5G network 394 may perform NR wireless communication with the electronic device 101 through the NR communication protocol stack 354 and the 5G NAS protocol 356.

According to an embodiment, the first communication protocol stack 314, the second communication protocol stack 316, the LTE communication protocol stack 344, and the NR communication protocol stack 354 may include a control plane protocol for transmitting and receiving a control message and a user plane protocol for transmitting and receiving user data. The control message may include a message related to at least one of, for example, security control, bearer setup, authentication, registration, or mobility management. The user data may include, for example, the remaining data except other than the control message.

According to an embodiment, the control plane protocol and the user plane protocol may include a physical (PHY) layer, a medium access control (MAC) layer, a radio link control (RLC) layer, or a packet data convergence protocol (PDCP) layer. The PHY layer may channel-code and modulate data received from, for example, a higher layer (for example, the MAC layer), transmit the data through a radio channel, demodulate and decode the data received through the radio channel, and transmit the data to the higher layer. The PHY layer included in the second communication protocol stack 316 and the NR communication protocol stack 354 may further perform an operation related to beamforming. The MAC layer may logically/physically map, for example, data to a radio channel for transmitting and receiving the data and perform a hybrid automatic repeat request (HARQ) for error correction. The RLC layer may perform, for example, data concatenation, segmentation, or reassembly, and data sequence identification, reordering, or duplication detection. The PDCP layer may perform an operation related to, for example, ciphering of a control message and user data and data integrity. The second communication protocol stack 316 and the NR communication protocol stack 354 may further include a service data adaptation protocol (SDAP). The SDAP may manage allocation of radio bearers on the basis of quality of service (QoS) of user data.

According to certain embodiments, the control plane protocol may include a radio resource control (RRC) layer and a non-access stratum (NAS) layer. The RRC layer may process control, for example, data related to radio bearer setup, paging, or mobility management. The NAS may process, for example, a control message related to authentication, registration, or mobility management.

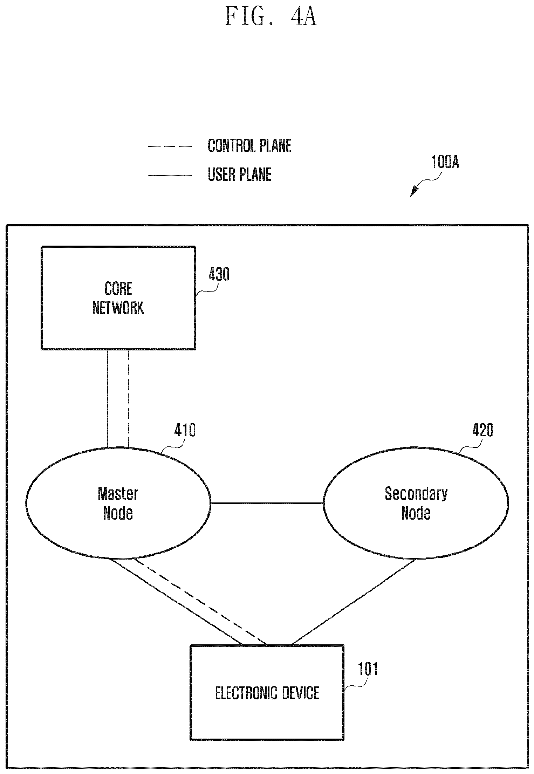

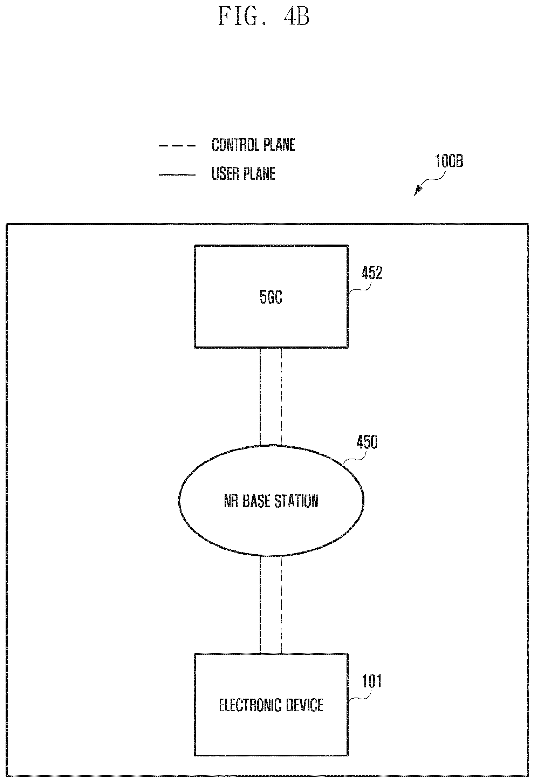

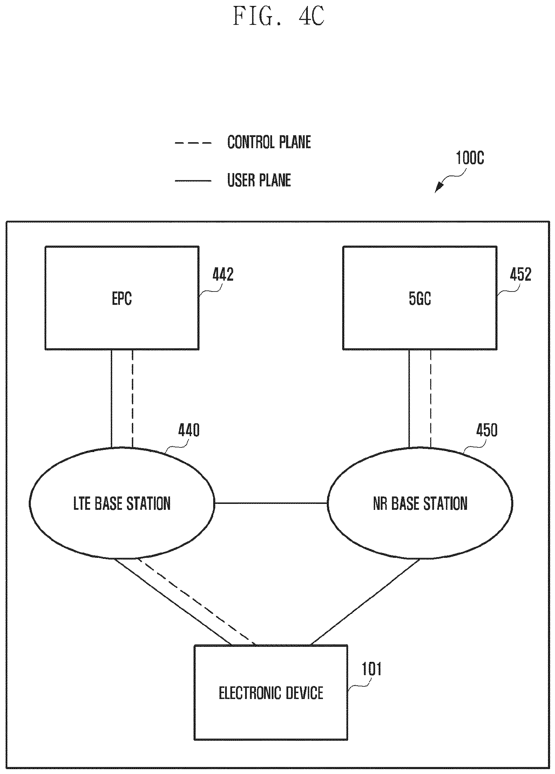

FIG. 4A illustrates a wireless communication system providing a network of legacy communication and/or 5G communication according to various embodiments, FIG. 4B illustrates a wireless communication system providing a network of legacy communication and/or 5G communication according to various embodiments, and FIG. 4C illustrates a wireless communication system providing a network of legacy communication and/or 5G communication according to various embodiments. Referring to FIGS. 4A to 4C, network environments 100A to 100C may include at least one of a legacy network and a 5G network. The legacy network may include, for example, a 4G or LTE eNB 450 (for example, an eNodeB (eNB)) of the 3GPP standard supporting radio access with the electronic device 101 and an evolved packet core (EPC) 451 for managing 4G communication. The 5G network may include, for example, a new radio (NR) gNB 450 (for example, a gNodeB (gNB)) supporting radio access with the electronic device 101 and a 5^{th} generation core (5GC) 452 for managing 5G communication of the electronic device 101.

According to various embodiments, the electronic device 101 may transmit and receive a control message and user data through legacy communication and/or 5G communication. The control message may include, for example, a control message related to at least one of security control of the electronic device 101, bearer setup, authentication, registration, or mobility management. The user data may be, for example, user data other than a control message transmitted and received between the electronic device 101 and a core network 430 (for example, the EPC 442).

Referring to FIG. 4A, the electronic device 101 according to an embodiment may transmit and receive at least one of a control message or user data to and from at least some of the 5G network (for example, the NR gNB 450 and the 5GC 452) using at least some of the legacy network (for example, the LTE eNB 440 and the EPC 442).

According to various embodiments, the network environment 100A may include a network environment for providing wireless communication dual connectivity (multi-radio access technology (RAT) dual connectivity (MR-DC)) to the LTE eNB 440 and the NR gNB 450 and transmitting and receiving a control message to and from the electronic device 101 through one core network 430 of the EPC 442 or the 5GC 452.

According to various embodiments, one of the MR-DC environment, the LTE eNB 440 or the NR gNB 450 may operate as a master node (MN) 410, and the other may operate as a secondary node (SN) 420. The MN 410 may be connected to the core network 430 and transmit and receive a control message. The MN 410 and the SN 420 may be connected to each other through a network interface and transmit and receive a message related to radio resource (for example, communication channel) management.

According to various embodiments, the MN 410 may include the LTE eNB 450, the SN 420 may include the NR gNB 450, and the core network 430 may include the EPC 442. For example, a control message may be transmitted and received through the LTE eNB 440 and the EPC 442, and user data may be transmitted and received through the LTE eNB 450 and the NR gNB 450.

Referring to FIG. 4B, according to various embodiments, the 5G network may independently transmit and receive a control message and user data to and from the electronic device 101.

Referring to FIG. 4C, the legacy network and the 5G network according to various embodiments may independently provide data transmission and reception. For example, the electronic device 101 and the EPC 442 may transmit and receive a control message and user data through the LTE eNB 450. According to another embodiment, the electronic device 101 and the 5GC 452 may transmit and receive a control message and user data through the NR gNB 450.

According to various embodiments, the electronic device 101 may be registered in at least one of the EPC 442 or the 5GC 450 and transmit and receive a control message.

According to various embodiments, the EPC 442 or the 5GC 452 may interwork and manage communication of the electronic device 101. For example, movement information of the electronic device 101 may be transmitted and received through an interface between the EPC 442 and the 5GC 452.

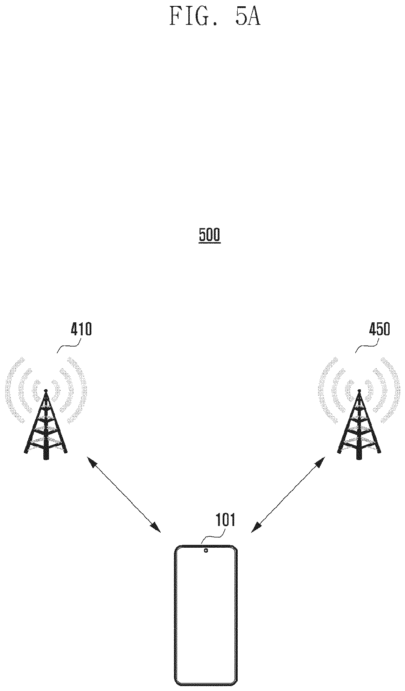

FIG. 5A is a diagram illustrating an electronic device and a cellular network according to various embodiments of the disclosure.

A cellular network 500 may include a first node (e.g., NR base station 450 of FIG. 4B) and/or a second node (e.g., master node 410 of FIG. 4A).

A first node 450 may be a base station supporting first cellular communication. The first cellular communication is one of various cellular communication methods supportable by an electronic device 101, and may mean, for example, a communication method on a second cellular network 294 of FIG. 2. For example, the first cellular communication may be a communication method using a 5th mobile communication method (e.g., new radio). According to an embodiment, the first node 450 may be a base station supporting a standalone that the first cellular communication supports. The standalone may be a mode in which the electronic device 101 transmits or receives data by using a base station supporting the first cellular communication. The electronic device 101 may be connected with the first node 450 and may transmit or receive data. Further, the first node 450 may be a base station supporting a non-standalone that the first cellular communication supports. The non-standalone may be a mode in which the electronic device 101 transmits or receives data by using a base station supporting the first cellular communication and a base station supporting a second cellular communication. The electronic device 101 may be connected with the first node 450 and/or the second node 460, and may transmit or receive data. Further, the first node 450 may be a base station supporting the second cellular communication. The second cellular communication is any one of various cellular communication methods being supportable by the electronic device (e.g., electronic device 101 of FIG. 1), and for example, may mean a communication method on the first cellular network 292 of FIG. 2. For example, the second cellular communication may be a communication method using a 4th mobile communication method (e.g., long term evolution).

The second node 410 may be a base station supporting another cellular communication different from the cellular communication of the first node 450. According to an embodiment, in case that the first node 450 supports the first cellular communication, the second node 410 may support the second cellular communication. The second node 410 may support the non-standalone of the first cellular communication. In case that the second node 410 supports the non-standalone of the first cellular communication, the electronic device 101 may transmit or receive data through the first node 450 and the second node 410.

According to an embodiment, in case that the first node 450 supports the second cellular communication, the second node 410 may support the first cellular communication.

The electronic device 101 may support multi-RAT dual connectivity (MR-DC). The electronic device 101 may be connected with all of the first node 450 and the second node 410, and may transmit or receive data. If transmission and/or reception of data does not occur for a designated time (e.g., time set by an RRC inactivity timer) after the transmission and/or reception of the data through the first node 450 and/or the second node 410 is completed, the electronic device 101 may be switched to an RRC idle state. The RRC inactivity timer may be set by a cellular network 500, and may be implemented on the cellular network 500. If the time set by the RRC inactivity timer expires, the cellular network 500 may transmit an RRC release message that is a message for instructing release of an RRC connection to the electronic device 101. The electronic device 101 may receive the RRC release message from the cellular network 500, and may be switched to a state where the RRC connection is released (e.g., RRC idle state or RRC inactive state).

In case of being switched to the state where the RRC connection is released, the electronic device 101 may be unable to transmit and/or receive the data through the first node 450 and/or the second node 410, and may require the switchover to the state where the RRC is connected (e.g., RRC connected state) for the data transmission and/or reception through the first node 450 and/or the second node 410.

An external electronic device (e.g., electronic device 104 of FIG. 1) may request a call connection from the electronic device 101. The external electronic device 104 may transmit a connection request message (e.g., INVITE message defined in Session Initiation Protocol (SIP)) to the cellular network 500 for a call connection with the electronic device 101. In case that the electronic device 101 is in the RRC connected state, the cellular network 500 may transmit a call connection request message to the electronic device 101. However, since the cellular network 500 in the RRC release state is unable to receive the call connection request message, it may transmit a paging message to the electronic device 101. The electronic device 101 having received the paging message may be switched from the RRC release state to the RRC connected state, may receive the call connection request message, and may perform a series of operations for the call connection with the external electronic device 104.

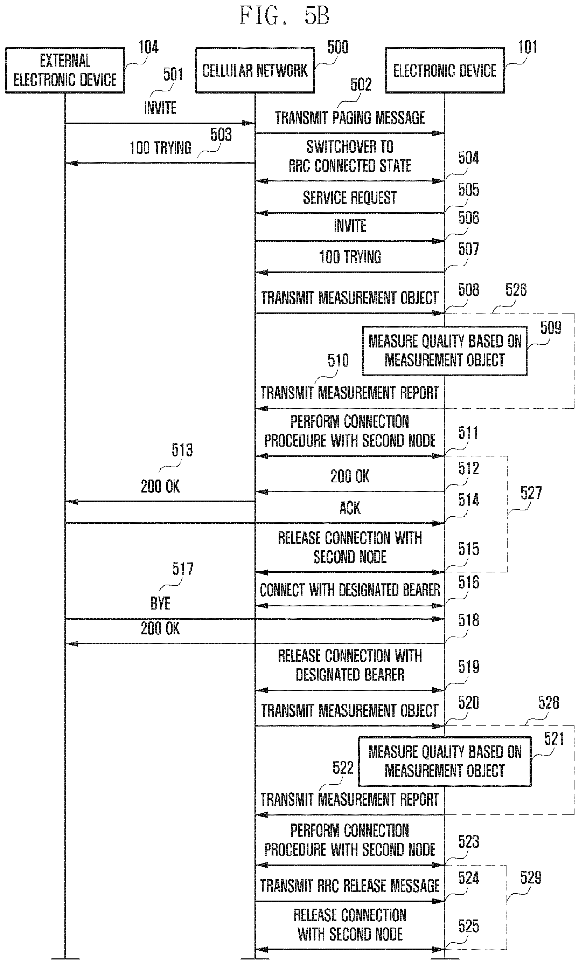

FIG. 5B is a diagram illustrating an embodiment in which an electronic device according to an embodiment performs call connection.

Hereinafter, for convenience in explanation, it is assumed that the external electronic device (e.g., external electronic device 104 of FIG. 1) is a mobile originated that requests a call connection (or transmits a call) from the electronic device (e.g., electronic device 101 of FIG. 1), and the electronic device 101 is a mobile terminated that receives a call connection request (or receives a call).

In step 501, the external electronic device 104 may transmit an INVITE message to a cellular network 500.

The INVITE message may be a message for requesting a call connection from the electronic device 101, and may be a message defined in the session initiation protocol (SIP).

The call connection request message may include quality information of voice data or video data that can be transmitted by the external electronic device 104. For example, the quality information of the voice data may include a sampling rate of the voice data that can be generated by using a microphone, a sampling rate of the voice data that can be transmitted through the cellular network 500, or a sampling rate of the voice data that can be received by the external electronic device. The quality information of the video data may include a resolution of the video data that can be generated by using a camera, a resolution of the video data that can be transmitted through the cellular network, or a resolution of the video data that can be received by the external electronic device 104.

In step 502, the cellular network 500 may transmit the paging message to the electronic device 101.

The cellular network 500 may identify that the electronic device 101 is in a state where the RRC connection is released (e.g., RRC inactive state or RRC idle state), and may transmit the paging message to the electronic device 101 so that the electronic device 101 can be switched to a state where the RRC is connected (e.g., RRC connected state) and the electronic device 101 can receive the INVITE message.

In step 503, the cellular network 500 may transmit 100 TRYING messages to the external electronic device 104.

The 100 TRYING messages are messages indicating that the request (e.g., INVITE message) transmitted by the external electronic device 104 is being processed (or is being transmitted to the electronic device 101), and may be messages defined in the SIP.

The order of steps 502 and 503 may be changed in a manner that step 503 may be performed prior to step 502, or step 502 and step 503 may be simultaneously performed.

In step 504, the electronic device 101 and the cellular network 500 may perform a series of operations so that the electronic device 101 can be switched to the RRC connected state.

The electronic device 101 may measure the quality of the signal being broadcasted by the node (e.g., first node 450) included in the cellular network 500, and if the quality satisfies a designated condition, the electronic device 101 may perform a series of operations for being connected with the first node 450, and may receive an RRC reconfiguration message from the first node 450.

In step 505, the electronic device 101 may perform a service request from the cellular network 500 as being switched to the RRC connected state.

In step 506, the electronic device 101 may receive, from the cellular network 500, the INVITE message transmitted by the external electronic device 104 in the RRC connected state.

In step 507, the electronic device 101 may transmit, to the cellular network 500, the 100 TRYING messages in response to the reception of the INVITE message.

The 100 TRYING messages are messages indicating that the request (e.g., INVITE message) transmitted by the external electronic device 104 is being processed (or is being transmitted to the electronic device 101), and may be messages defined in the SIP.

In step 508, the cellular network 500 may transmit the measurement object to the electronic device 101.

The measurement object may include information of a node adjacent to the first node 450 that is the node connected with the electronic device 101. The measurement object may include various kinds of information including identification information of the second node 410 that is the node adjacent to the first node 450, a frequency band of a signal that can be transmitted or received by the second node 410, a frequency bandwidth of a signal that can be transmitted or received by the second node 410, and/or information of subcarrier spacing (SCS). The electronic device 101 in the RRC connected state may receive a measurement object (or measobject) included in the RRC reconfiguration message received through the first node 450.

In step 509, the electronic device 101 may measure the quality of the signal based on the measurement object.

The electronic device 101 may control the communication circuit (e.g., wireless communication module 192 of FIG. 1) so as to receive the signal of the frequency band being used by the second node 410 included in the measurement object, and measure the quality of the signal being broadcasted by the second node through reception of the signal of the frequency band being used by the second node 450 included in the measurement object.

In step 510, the electronic device 101 may transmit a measurement report to the cellular network 500.

The electronic device 101 may identify that the measured quality satisfies the condition included in the measurement object, and may transmit the measurement report including the measured quality to the cellular network 500. The cellular network 500 may receive the measurement report, and may determine whether to connect the electronic device 101 with the second node 410 based on the measurement report.

In step 511, the electronic device 101 and the cellular network 500 may perform a series of procedures so that the electronic device 101 and the second node 410 can be connected with each other.

In step 512, the electronic device 101 may transmit, to the cellular network 500, 200 OK messages that are messages indicating that the processing of the request (e.g., INVITE message) of the external electronic device 104 has succeeded.

In step 513, the cellular network 500 may transmit the 200 OK messages received from the electronic device 101 to the external electronic device 104.

In step 514, the external electronic device 104 may transmit a response message (ack message indicating reception of the 200 OK messages) corresponding to the 200 OK messages to the electronic device 101.

The processing success for the request from the external electronic device 104 may include that the electronic device 101 has received and processed the call request requested by the external electronic device 104. The electronic device 101 may generate and configure a call channel between the external electronic device 104 and the electronic device 101 in accordance with the processing success for the request from the external electronic device 104.

As parts of generation and configuration of a call channel, in order to determine a bit rate of voice data and video data being transmitted and received during a call connection, a compression format (codec), or quality (e.g., this may mean various variables representing qualities for voice data and video data including a sampling rate in case of the voice data and a resolution in case of the video data), the electronic device 101 and the external electronic device 104 may proceed with mutual negotiation by using a method defined in a session description protocol (SDP). The electronic device 101 and the external electronic device 104 may determine the characteristics of the voice data or video data to be transmitted through the mutual negotiation, and may transmit or receive the voice data or the video data by using the determined characteristics.

The cellular network 500 may be configured to perform a video call and/or a voice call through a master node (e.g., first node 450). In a situation that the electronic device 101 does not transmit and/or receive another piece of data that is not the data related to the video call and/or the voice call, the data transmission and/or reception through the second node 410 may not be performed.

If the transmission and/or reception of data through the second node 410 do not occur for a designated time (e.g., time set by an RRC inactivity timer), the electronic device 101 may release the connection with the second node 410. The RRC inactivity timer may be set by the cellular network 500, and may be implemented on the cellular network 500. If the time set by the RRC inactivity timer expires, the cellular network 500 may transmit a message for releasing the connection with the second node 410 to the electronic device 101.

In step 515, the electronic device 101 may release the connection with the second node 410.

In step 516, the electronic device 101 may be connected with the cellular network 500 through the designated bearer.

In setting a call channel, the electronic device 101 and the external electronic device 104 may transmit the voice data and/or the video data through the bearer designated by the cellular network 500. The designated bearer may mean a path which is generated between the first node 450 and the electronic device 101 and which can transmit and/or receive the data. The voice call and/or the video call may be performed through the master node (e.g., first node 450), and the secondary node (e.g., second node 410) may not transmit or receive the data related to the voice call and/or the video call.

The electronic device 101 may perform a call with the external electronic device 104 in a manner of transmitting or receiving the data related to the video call and/or the voice call through the designated bearer. While transmitting or receiving the data related to the video call and/or the voice call through the designated bearer, the electronic device 101 may maintain the connected state with the second node 410.

In step 517, the external electronic device 104 may end the call between the electronic device 101 and the external electronic device 104, and may transmit a message (e.g., BYE message) indicating the end of the call to the electronic device 101.

In step 518, the electronic device 101 may transmit, to the external electronic device 104, a message (ack message) indicating that the message indicating the end of the call has been received.

In step 519, the electronic device 101 may release the connection of the designated bearer. The electronic device 101 may release the connection of the designated bearer in accordance with the end of the call.

In step 520, the cellular network 500 may transmit the measurement object to the electronic device 101 in accordance with the release of the connection of the designated bearer.

The measurement object may include information of the node adjacent to the first node 450 that is the node connected with the electronic device 101. The measurement object may include various kinds of information including identification information of the second node 410 that is the node adjacent to the first node 450, the frequency band of a signal that can be transmitted or received by the second node 410, the frequency bandwidth of the signal that can be transmitted or received by the second node 410, and/or information of subcarrier spacing (SCS). The electronic device 101 in the RRC connected state may receive a measurement object (or measobject) included in the RRC reconfiguration message received through the first node 450.

In step 521, the electronic device 101 may measure the quality of the signal based on the measurement object.

If the measurement object is received even in a situation where data to be transmitted or received does not exist, the electronic device 101 may measure the quality of the signal based on the measurement object. If the measurement object is received even in a situation where data to be transmitted or received does not exist, and thus it is not necessary for the electronic device 101 to be connected with the second node 410, the electronic device 101 may measure the quality of the signal based on the measurement object.

The electronic device 101 may control the communication circuit (e.g., wireless communication module 192 of FIG. 1) so as to receive the signal of the frequency band being used by the second node 410 included in the measurement object, and may measure the quality of the signal being broadcasted by the second node 450 through reception of the signal of the frequency band being used by the second node 450 included in the measurement object.

In step 522, the electronic device 101 may transmit the measurement report to the cellular network 500.

The electronic device 101 may identify that the measured quality satisfies the condition included in the measurement object, and may transmit the measurement report including the measured quality to the cellular network 500. The cellular network 500 may receive the measurement report, and may determine whether to connect the electronic device 101 with the second node 410 based on the measurement report.

In step 523, the electronic device 101 and the cellular network 500 may perform a series of procedures so that the electronic device 101 and the second node 410 can be connected with each other.

Since the electronic device 101 is in a situation where the electronic device 101 is connected with the second node 410, but the data transmission and/or reception are not present, the electronic device 101 may not transmit or receive the data through the second node 410.

In step 524, the cellular network 500 may transmit, to the electronic device 101, an RRC release message that is a message indicating the release of the RRC connection.

If the electronic device 101 does not perform the data transmission and/or reception while the time set by the RRC inactivity timer expires, the cellular network 500 may transmit, to the electronic device 101, the RRC release message that is the message indicating the release of the RRC connection.

In step 525, the electronic device 101 may release the connection with the second node 410 in accordance with the reception of the RRC release message.

With reference to FIG. 5B, even in a state where the connection with the second node 410 is not necessary, the electronic device 101 may perform a series of operations for the connection with the second node 410 in accordance with the reception of the measurement object.

For example, if the measurement object is received from the cellular network 500 (step 508), the electronic device 101 may measure the quality based on the measurement object (step 509), and may transmit the measurement report (step 509). Power consumption may occur due to the operations related to the connection with the second node 410 during a time 526 while the electronic device 101 performs the above operations.

As another example, in accordance with reception of a message for requesting the connection with the second node 410 from the cellular network 500, the electronic device 101 may perform a series of procedures for the connection with the second node 410 (step 511), and unnecessary power consumption may occur during the time 527 when the connection with the second node 410 is maintained until the connection with the second node 410 is released (step 515).

As still another example, if the measurement object is received from the cellular network 500 (step 520), the electronic device 101 may measure the quality based on the measurement object (step 521), and may transmit the measurement report (step 522). Power consumption may occur due to the operations related to the connection with the second node 410 during a time 528 while the electronic device 101 performs the above operations.

As still another example, in accordance with reception of a message for requesting the connection with the second node 410 from the cellular network 500, the electronic device 101 may perform a series of procedures for the connection with the second node 410 (step 523), and unnecessary power consumption may occur during the time 529 when the connection with the second node 410 is maintained until the connection with the second node 410 is released (step 525).

The unnecessary power consumption as described above may be the power consumption occurring as the connection between the second node 410 and the electronic device 101 is uniformly performed in a situation where the connection with the second node 410 is unnecessary.

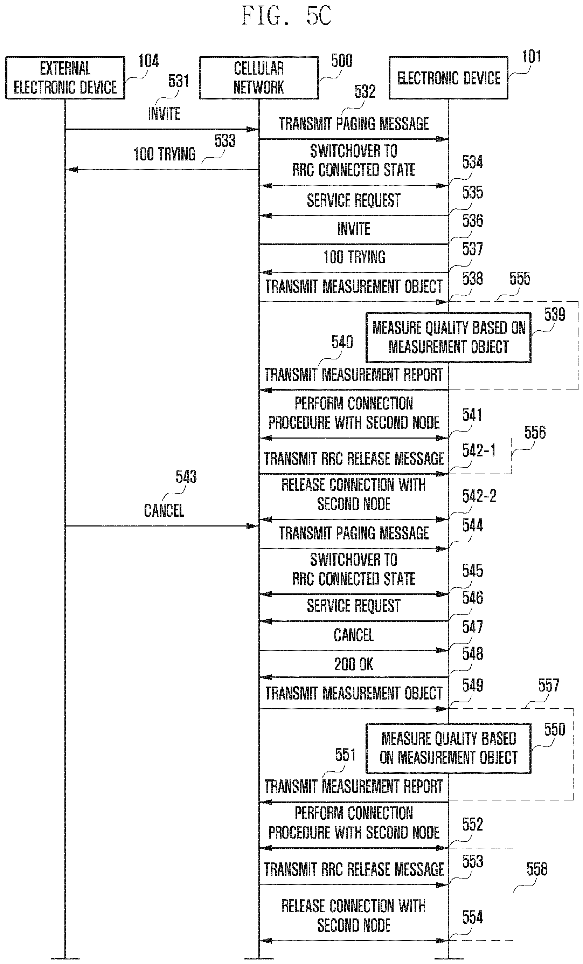

FIG. 5C is a diagram illustrating an embodiment in which call connection has failed in an electronic device according to an embodiment.

Hereinafter, for convenience in explanation, it is assumed that the external electronic device (e.g., external electronic device 104 of FIG. 1) is a mobile originated that requests a call connection (or transmits a call) from the electronic device (e.g., electronic device 101 of FIG. 1), and the electronic device 101 is a mobile terminated that receives a call connection request (or receives a call).

In step 531, the external electronic device 104 may transmit an INVITE message to a cellular network 500.

The INVITE message may be a message for requesting a call connection from the electronic device 101, and may be a message defined in the session initiation protocol (SIP).

The call connection request message may include quality information of voice data or video data that can be transmitted by the external electronic device 104. For example, the quality information of the voice data may include a sampling rate of the voice data that can be generated by using a microphone, a sampling rate of the voice data that can be transmitted through the cellular network 500, or a sampling rate of the voice data that can be received by the external electronic device. The quality information of the video data may include a resolution of the video data that can be generated by using a camera, a resolution of the video data that can be transmitted through the cellular network, or a resolution of the video data that can be received by the external electronic device 104.

In step 532, the cellular network 500 may transmit the paging message to the electronic device 101.

The cellular network 500 may identify that the electronic device 101 is in a state where the RRC connection is released (e.g., RRC inactive state or RRC idle state), and may transmit the paging message to the electronic device 101 so that the electronic device 101 can be switched to a state where the RRC is connected (e.g., RRC connected state) and the electronic device 101 can receive the INVITE message.

In step 533, the cellular network 500 may transmit 100 TRYING messages to the external electronic device 104.

The 100 TRYING messages are messages indicating that the request (e.g., INVITE message) transmitted by the external electronic device 104 is being processed (or is being transmitted to the electronic device 101), and may be messages defined in the SIP.

The order of steps 532 and 533 may be changed in a manner that step 533 may be performed prior to step 532, or step 532 and step 533 may be simultaneously performed.

In step 534, the electronic device 101 and the cellular network 500 may perform a series of operations so that the electronic device 101 can be switched to the RRC connected state.

The electronic device 101 may measure the quality of the signal being broadcasted by the node (e.g., first node 450) included in the cellular network 500, and if the quality satisfies a designated condition, the electronic device 101 may perform a series of operations for being connected with the first node 450, and may receive an RRC reconfiguration message from the first node 450.

In step 535, the electronic device 101 may perform a service request from the cellular network 500 as being switched to the RRC connected state.

In step 536, the electronic device 101 may receive, from the cellular network 500, the INVITE message transmitted by the external electronic device 104 in the RRC connected state.

In step 537, the electronic device 101 may transmit, to the cellular network 500, the 100 TRYING messages in response to the reception of the INVITE message.

The 100 TRYING messages are messages indicating that the request (e.g., INVITE message) transmitted by the external electronic device 104 is being processed (or is being transmitted to the electronic device 101), and may be messages defined in the SIP.

In step 538, the cellular network 500 may transmit the measurement object to the electronic device 101.

The measurement object may include information of a node adjacent to the first node 450 that is the node connected with the electronic device 101. The measurement object may include various kinds of information including identification information of the second node 410 that is the node adjacent to the first node 450, a frequency band of a signal that can be transmitted or received by the second node 410, a frequency bandwidth of a signal that can be transmitted or received by the second node 410, and/or information of subcarrier spacing (SCS). The electronic device 101 in the RRC connected state may receive a measurement object (or measobject) included in the RRC reconfiguration message received through the first node 450.

In step 539, the electronic device 101 may measure the quality of the signal based on the measurement object.

The electronic device 101 may control the communication circuit (e.g., wireless communication module 192 of FIG. 1) so as to receive the signal of the frequency band being used by the second node 410 included in the measurement object, and measure the quality of the signal being broadcasted by the second node 410 through reception of the signal of the frequency band being used by the second node 410 included in the measurement object.

In step 540, the electronic device 101 may transmit a measurement report to the cellular network 500.

The electronic device 101 may identify that the measured quality satisfies the condition included in the measurement object, and may transmit the measurement report including the measured quality to the cellular network 500. The cellular network 500 may receive the measurement report, and may determine whether to connect the electronic device 101 with the second node 410 based on the measurement report.

In step 541, the electronic device 101 and the cellular network 500 may perform a series of procedures so that the electronic device 101 and the second node 410 can be connected with each other.

The cellular network 500 may be configured to perform the video call and/or the voice call through the master node (e.g., first node 450). In a situation where transmission and/or reception of different data that is not the data related to the video call and/or the voice call are not performed, the electronic device 101 may not perform the data transmission and/or reception through the second node 410.

In FIG. 5C, it is assumed that the electronic device 101 has received a call connection request from the external electronic device 104, but does not transmit a message corresponding to the call connection request to the cellular network 500 for a designated time.

If the transmission and/or reception of data through the second node 410 do not occur for a designated time (e.g., time set by an RRC inactivity timer), the electronic device 101 may release the connection with the second node 410. The RRC inactivity timer may be set by the cellular network 500, and may be implemented on the cellular network 500. If the time set by the RRC inactivity timer expires, the cellular network 500 may transmit a message for releasing the connection to the electronic device 101.

In step 542-1, the cellular network 500 may transmit a message for requesting the release of the RRC connection to the electronic device 101 in accordance with the expiration of the RRC inactivity timer.

In step 542-2, the electronic device 101 may release the connection with the second node 410 in accordance with the reception of the message for requesting the release of the RRC connection.

The external electronic device 104 may cancel the call connection request since the electronic device 101 is unable to receive a message for approving the call connection request or a message for rejecting the call connection request.

In step 543, the external electronic device 104 may transmit a message (e.g., CANCEL message) for canceling the call connection request to the cellular network 500.

In step 544, the cellular network 500 may transmit a paging message to the electronic device 101.

The cellular network 500 may identify that the electronic device is in a state where the RRC connection is released (e.g., RRC inactive state or RRC idle state), and may transmit the paging message to the electronic device 101 so that the electronic device 101 can be switched to a state where the RRC is connected (e.g., RRC connected state) and the electronic device 101 can receive the CANCEL message.

In step 545, the electronic device 101 and the cellular network 500 may perform a series of operations so that the electronic device 101 is switched to the RRC connected state.

The electronic device 101 may measure the quality of the signal being broadcasted by the node (e.g., first node 450) included in the cellular network 500, and if the quality satisfies a designated condition, may perform a series of operations for being connected with the first node 450, and may receive an RRC reconfiguration message from the first node 450.

In step 546, the electronic device 101 may perform a service request from the cellular network 500 as being switched to the RRC connected state.

In step 547, the cellular network 500 may transmit the message (e.g., CANCEL message) for canceling the call connection request to the electronic device 101.

The electronic device 101 in the RRC connected state may receive, from the cellular network 500, the CANCEL message transmitted by the external electronic device 104.

In step 548, the electronic device 101 may transmit, to the cellular network 500, 200 OK messages that are messages for indicating that the processing of the request (e.g., CANCEL message) from the external electronic device 104 has succeeded.

In step 549, the cellular network 500 may transmit the measurement object to the electronic device 101 in accordance with the cancelation of the call connection request.

The measurement object may include information of the node adj acent to the first node 450 that is the node connected with the electronic device 101. The measurement object may include various kinds of information including identification information of the second node 410 that is the node adjacent to the first node 450, the frequency band of a signal that can be transmitted or received by the second node 410, the frequency bandwidth of the signal that can be transmitted or received by the second node 410, and/or information of subcarrier spacing (SCS). The electronic device 101 in the RRC connected state may receive a measurement object (or measobject) included in the RRC reconfiguration message received through the first node 450.

In step 550, the electronic device 101 may measure the quality of the signal based on the measurement object.

If the measurement object is received even in a situation where data to be transmitted or received does not exist, the electronic device 101 may measure the quality of the signal based on the measurement object. If the measurement object is received even in a situation where data to be transmitted or received does not exist, and thus it is not necessary for the electronic device 101 to be connected with the second node 410, the electronic device 101 may measure the quality of the signal based on the measurement object.

The electronic device 101 may control the communication circuit (e.g., wireless communication module 192 of FIG. 1) so as to receive the signal of the frequency band being used by the second node 410 included in the measurement object, and may measure the quality of the signal being broadcasted by the second node 450 through reception of the signal of the frequency band being used by the second node 450 included in the measurement object.

In step 551, the electronic device 101 may transmit the measurement report to the cellular network 500.

The electronic device 101 may identify that the measured quality satisfies the condition included in the measurement object, and may transmit the measurement report including the measured quality to the cellular network 500. The cellular network 500 may receive the measurement report, and may determine whether to connect the electronic device 101 with the second node 410 based on the measurement report.

In step 552, the electronic device 101 and the cellular network 500 may perform a series of procedures so that the electronic device 101 and the second node 410 can be connected with each other.

Since the electronic device 101 is in a situation where the electronic device 101 is connected with the second node 410, but the data transmission and/or reception are not present, the electronic device 101 may not transmit or receive the data through the second node 410.

In step 553, the cellular network 500 may transmit, to the electronic device 101, an RRC release message that is a message indicating the release of the RRC connection.

If the electronic device 101 does not perform the data transmission and/or reception while the time set by the RRC inactivity timer expires, the cellular network 500 may transmit, to the electronic device 101, the RRC release message that is the message indicating the release of the RRC connection.

In step 554, the electronic device 101 may release the connection with the second node 410 in accordance with the reception of the RRC release message.

With reference to FIG. 5C, even in a state where the connection with the second node 410 is not necessary, the electronic device 101 may perform a series of operations for the connection with the second node 410 in accordance with the reception of the measurement object.

For example, if the measurement object is received from the cellular network 500 (step 538), the electronic device 101 may measure the quality based on the measurement object (step 539), and may transmit the measurement report (step 540). Power consumption may occur due to the operations related to the connection with the second node 410 during a time 555 while the electronic device 101 performs the above operations.

As another example, in accordance with reception of a message for requesting the connection with the second node 410 from the cellular network 500, the electronic device 101 may perform a series of procedures for the connection with the second node 410 (step 541), and unnecessary power consumption may occur during the time 556 when the connection with the second node 410 is maintained until the connection with the second node 410 is released.

As still another example, if the measurement object is received from the cellular network 500 (step 549), the electronic device 101 may measure the quality based on the measurement object (step 550), and may transmit the measurement report (step 551). Power consumption may occur due to the operations related to the connection with the second node 410 during a time 557 while the electronic device 101 performs the above operations.

As still another example, in accordance with reception of a message for requesting the connection with the second node 410 from the cellular network 500, the electronic device 101 may perform a series of procedures for the connection with the second node 410 (step 552), and unnecessary power consumption may occur during the time 558 when the connection with the second node 410 is maintained until the connection with the second node 410 is released (step 554).

The unnecessary power consumption as described above may be the power consumption occurring as the connection between the second node 410 and the electronic device 101 is uniformly performed in a situation where the connection with the second node 410 is unnecessary.

Hereinafter, an embodiment will be described, in which an electronic device 101 prevents unnecessary connection with a second node 410 by preventing (or blocking) measurement of the quality of a signal being broadcasted by the second node 410 based on an indicator included in a paging message.

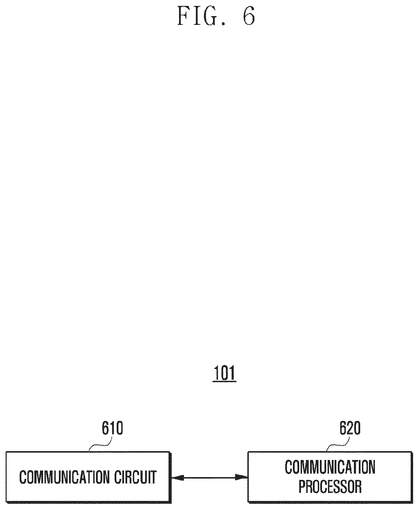

FIG. 6 is a block diagram of an electronic device according to an embodiment.

With reference to FIG. 6, an electronic device (e.g., electronic device 101 of FIG. 1) may include a communication circuit 610 (e.g., wireless communication module 192 of FIG. 1) and/or a communication processor 620 (e.g., first communication processor 212 of FIG. 2 and/or second communication processor 242 of FIG. 2).

The communication processor 620 may perform data transmission and/or reception through a first cellular communication and/or a second cellular communication. The communication processor 640 may be connected to a first node (e.g., first node 410 of FIG. 5A) through the first cellular communication, or may be connected to a second node (e.g., second node 450 of FIG. 5A) through the second cellular communication. The communication processor 620 may transmit user data received from an application processor (e.g., processor 120 of FIG. 1) through the first cellular communication and/or the second cellular communication, and may transmit the user data received through the first cellular communication and/or the second cellular communication to the processor 120.

The first cellular communication is one of various cellular communication methods supportable by the electronic device 101, and may mean, for example, a communication method on a second cellular network 294 of FIG. 2. For example, the first cellular communication may be a communication method using a 5th mobile communication method (e.g., new radio).

The second cellular communication is any one of various cellular communication methods being supportable by the electronic device (e.g., electronic device 101 of FIG. 1), and may mean, for example, a communication method on the first cellular network 292 of FIG. 2. For example, the second cellular communication may be a communication method using a 4th mobile communication method (e.g., long term evolution).

The communication circuit 610 is a communication circuit supporting the first cellular communication and/or the second cellular communication, and may provide a communication with an external electronic device (e.g., electronic device 104 of FIG. 1) to the electronic device 101 through the first cellular communication and/or the second cellular communication.

If data transmission and/or reception do not occur for a predetermined time (e.g., time set by an RRC inactivity timer set in a cellular network 500, the communication processor 620, after being connected with the cellular network 500 through the first node (e.g., first node 450 of FIG. 5A), may be switched from an RRC connected state to an RRC idle state (or RRC inactive state).

In case that the electronic device 101 is not in the RRC connected state (or in case that the electronic device 101 is in the RRC idle state or in the RRC inactive state), the communication processor 620 may receive a paging message from the cellular network (e.g., cellular network 500 of FIG. 5A). The paging message may be a message for the electronic device to be switched to the RRC connected state, and may be transmitted when the cellular network 500 intends to transmit data to the electronic device 101.

The cellular network 500 may transmit the paging message to the electronic device 101 by using a paging channel. The paging channel is a channel that is used to periodically transmit network-related information to electronic devices connected to the first node 450, and may be a channel included in a control plane.

The cellular network 500 may include an indicator indicating a service type for data transmission and/or reception in the paging message. The indicator may be information indicating the type of the service corresponding to the data to be received by the electronic device 101 as the electronic device 101 is switched to the RRC connected state after the reception of the paging message. According to an example, the indicator may be included in a paging cause field of the paging message. The paging cause field is a feature proposed in 3GPP TS. 36.331 or TS. 38.331 for the electronic device supporting a plurality of USIMs, and may be a field in which information on the cause of transmission of the paging message is included.

If the electronic device 101 can decode the paging cause field, the cellular network 500 may transmit the paging message including the paging cause field to the electronic device 101. Before receiving the paging message, the electronic device 101 may include information indicating that the electronic device 101 can decode the paging cause field in an attach request and/or a registration request from the cellular network 500 or the first node 450 to transmit the attach request and/or the registration request, and the cellular network 500 may identify that the electronic device 101 can decode the paging cause field based on the information indicating that the electronic device 101 can decode the paging cause field, which is included in the attach request and/or the registration request from the first node 450.

The communication processor 620 may receive the paging message, and may make the electronic device be switched from the RRC idle state (or RRC inactive state) to the RRC connected state. In the RRC connected state, the communication processor 620 may receive the data being transmitted by the cellular network 500 through the first node 450. The first node 450 is a node supporting multi-RAT dual connectivity (MR-DC), and the electronic device 101 may be simultaneously connected with the first node 450 and another node adjacent to the first node 450, and may transmit and/or receive the data.

In accordance with the switchover to the RRC connected state, the communication processor 620 may receive the RRC reconfiguration message from the cellular network 500. The RRC reconfiguration message may include a measurement object including information on the node adjacent to the first node 450 that is the node connected with the electronic device 101.

The measurement object may be data that is used to measure the quality of the signal being broadcasted by at least one node adjacent to the first node 450 that is the node connected with the electronic device 101. The measurement object may include various kinds of information including identification information of the second node (e.g., second node 410 of FIG. 5A) that is the node adjacent to the first node 450, a frequency band of a signal that can be transmitted or received by the second node 410, a frequency bandwidth of a signal that can be transmitted or received by the second node 410, and/or information of subcarrier spacing (SCS). The measurement object may be for the electronic device 101 to transmit and/or receive the data in the MR-DC method. In case that the communication processor 620 measures the quality of the signal being broadcasted by another node by using the measurement object, and transmits the measurement report including the measured quality to the cellular network 500, the electronic device 101 may be connected to the first node 450 and the second node 410 by permission of the cellular network 500, and may transmit or receive the data.

The communication processor 620, in the RRC connected state, may identify the measurement object (or measobject) included in the RRC reconfiguration message received through the first node 450.

The communication processor 620 may receive the paging message, and may identify the service type for transmission or reception of the data included in the paging message.

The communication processor 620 may identify whether the identified service type coincides with a predetermined first service type.

The first service type may mean the type of the service in which the electronic device 101 is connected to one node (or master node) (e.g., first node 450 of FIG. 5A), and is able to perform the data transmission or reception.

For example, a video call and/or a voice call may be a service for performing data transmission and/or reception through one node (or master node), and the video call and/or the voice call may be a first service type.

As another example, a communication service without heavy data traffics may be a service capable of performing a smooth service even if the data transmission and/or reception is performed through one node (or master node), and the service without heavy data traffics may be the first service type.

In addition, the service capable of performing the data transmission and/or reception through one node (e.g., master node) other than at least two nodes (e.g., master node and secondary node) may be the first service type.

The communication processor 620 may prevent (or block) the measurement of the quality of the signal using the measurement object in response to coincidence of the service type included in the paging message (or indicator) and the first service type with each other.

The prevention (or blocking) of the measurement of the quality of the signal using the measurement object may include the prevention (or blocking) of the measurement of the quality (e.g., reference signals received power (RSRP)) of the signal being broadcasted by another node (e.g., second node 410) adjacent to the first node 450 included in the measurement object and/or the prevention (or blocking) of the transmission of the measurement report including the measurement result of the quality of the signal to the first node 450.

If the service type included in the paging message is the same as the first service type, the service being performed by the electronic device 101 after the reception of the paging message may be a service for performing the data transmission and/or reception through one node (e.g., first node 450), and may be a service in which the data transmission and/or reception through another node (e.g., second node 410) do not occur.

Accordingly, if the service type included in the paging message is the same as the first service type, the electronic device 101 may reduce (or prevent) the power consumption that may occur due to the quality measurement of the second node 410 and/or the connection with the second node 410 by preventing (or blocking) the measurement of the quality of the signal using the measurement object.

Further, the prevention (or blocking) of the measurement of the quality of the signal using the measurement object may include the prevention (or blocking) of the transmission of the measurement report including the measurement result of the quality of the signal to the first node 450 although the quality (e.g., reference signals received power (RSRP)) of the signal being broadcasted by another node (e.g., second node 410) adjacent to the first node 450 included in the measurement object is measured.

If the service type included in the paging message is the same as the first service type, the service being performed by the electronic device 101 after the reception of the paging message may be a service for performing the data transmission and/or reception through one node (e.g., first node 450), and may be a service in which the data transmission and/or reception through another node (e.g., second node 410) do not occur. Accordingly, if the service type included in the paging message is the same as the first service type, the electronic device 101 may reduce (or prevent) the power consumption that may occur due to the connection with the second node 410 by preventing (or blocking) the measurement of the quality of the signal using the measurement object.

If the service type included in the paging message is the same as the first service type, the communication processor 620 may prevent (or block) the measurement of the quality of the signal using the measurement object. However, if the electronic device 101 satisfies the designated condition, the communication processor 620 may release the prevention (or blocking) of the measurement of the quality of the signal using the measurement object.

The designated condition may be a condition for releasing the prevention of the measurement of the quality of the signal using the measurement object.

According to an example, the designated condition may include a condition that the electronic device 101 receives the RRC release message from the cellular network 500. As the RRC release message is received from the cellular network 500, the prevention (or blocking) of the measurement of the quality of the signal using the measurement object may be released. The reception of the RRC release message may occur in case that the electronic device 101 does not perform the data transmission and/or reception with respect to the cellular network 500 over a designated time (e.g., time set by the RRC inactivity timer). Accordingly, for relatively fast node search and connection in accordance with the performing of a new service, the communication processor 620 may prevent (or block) the measurement of the quality of the signal using the measurement object.

According to an embodiment, the designated condition may include the condition that the electronic device 101 performs the transmission and/or reception of the data corresponding to the second service type that is different from the first service type. In order to perform the transmission and/or reception of the data corresponding to the second service type, the electronic device 101 may require the connection with the node (e.g., second node 410) that is different from the currently connected node (e.g., first node 450). For the connection with the second node 410, it is required to measure the quality of the signal being broadcasted by the second node 410 and to transmit the measurement report including the measured quality to the first node, and thus the communication processor 620 may release the prevention (or blocking) of the measurement of the quality of the signal using the measurement object for the relatively fast node search and connection.

The electronic device 101 may identify the transmission and/or reception of data corresponding to the second service type that is different from the first service type in a manner that the communication processor 620 identifies that a packet data network (PDN) to which the data to be transmitted or received is to move is the PDN different from the currently connected PDN. The communication processor 620 may identify that the packet data network (PDN) to which the data to be transmitted or received is to move is the PDN different from the currently connected PDN in a manner of comparing identification information of a resource block being used by the currently connected PDN with identification information of a resource block being used by the PDN being used by the data to be transmitted or received.

The communication processor 620 may perform (or maintain) the measurement of the quality of the signal using the measurement object in response to the difference between the service type included in the paging message (or indicator) and the first service type.

The performing (or maintaining) of the measurement of the quality of the signal using the measurement object may include the performing of the measurement of the quality (e.g., reference signals received power (RSRP) of the signal being broadcasted by another node (e.g., second node 410) adjacent to the first node 450 included in the measurement object and/or the performing of the transmission of the measurement report including the measurement result of the quality of the signal to the first node 450.

If the service type included in the paging message is different from the first service type, the service being performed by the electronic device 101 after the reception of the paging message may be a service in which the data transmission and/or reception may occur through not only the node (e.g., first node 450) connected with the electronic device but also another node (e.g., second node 410). Accordingly, if the service type included in the paging message is different from the first service type, the electronic device 101 may improve the quality of the service by performing the measurement of the quality of the signal using the measurement object.

The electronic device 101 may select the measurement object to measure the quality of the signal among one or more measurement objects and/or may measure the quality of the signal based on the selected measurement object in addition to the prevention (or blocking) of the measurement of the quality of the signal using the indicator included in the paging message.

The communication processor 620 may receive the paging message, and may identify the service type for transmission or reception of the data included in the paging message.

The communication processor 620 may identify whether the identified service type coincides with a predetermined third service type.

The third service type may include a service type having a relatively large traffic of the data to be transmitted or received. For example, the service for transmitting or receiving high-quality content may be the third service type.

The communication processor 620 may select the measurement object including information of the node that supports a bandwidth equal to or larger than a designated size among one or more measurement objects in response to the identity of the service type included in the paging message (or indicator) and the third service type. The designated size may mean the bandwidth in which the traffic of the data to be transmitted or received can perform a relatively large service.

Further, the communication processor 620 may select the measurement object including information of the node that supports the bandwidth of the largest size among one or more measurement objects in response to the identity of the service type included in the paging message (or indicator) and the third service type.

The communication processor 620 may select the measurement object including the information of the node supporting the bandwidth equal to or larger than the designated size or the measurement object including the information of the node supporting the bandwidth of the largest size, and may measure the quality of the signal based on the selected measurement object.

The communication processor 620 may measure the quality of the signal being broadcasted by the node included in the selected measurement object by controlling the communication circuit 610 to be able to receive the signal of the frequency band being used by the node and receiving the signal of the frequency band being used by the node. In order to induce the connection between the node that is the object of the measurement of the quality of the signal and the electronic device 101, the communication processor 620 may transmit the measurement report including the measured quality to the cellular network 500. The electronic device 101 may be connected with the node having the large bandwidth through the above-described method, and may smoothly perform the service having a relatively large traffic of the data to be transmitted or received.

The communication processor 620 may identify whether the identified service type coincides with a predetermined fourth service type.

The fourth service type may include a service type requiring a relatively low latency. For example, a service related to autonomous driving of a transportation means and a service related to mobile edge computing (MEC) may be the fourth service type.

The communication processor 620 may select the measurement object including the information of the node supporting subcarrier spacing (SCS) equal to or larger than the designated size among one or more measurement objects in response to the identity of the service type included in the paging message (or indicator) and the fourth service type. The SCS equal to or larger than the designated size may mean the SCS that can perform the service requiring the low latency.

Further, the communication processor 620 may select the measurement object including the information of the node supporting the largest SCS in response to the identity of the service type included in the paging message (or indicator) and the third service type.

The communication processor 620 may select the measurement object including the information of the node supporting the SCS equal to or larger than the designated size or the measurement object including the information of the node supporting the SCS having the largest size, and may measure the quality of the signal based on the selected measurement object.

The communication processor 620 may measure the quality of the signal being broadcasted by the node included in the selected measurement object by controlling the communication circuit 610 to be able to receive the signal of the frequency band being used by the node and receiving the signal of the frequency band being used by the node. In order to induce the connection between the node that is the object of the measurement of the quality of the signal and the electronic device 101, the communication processor 620 may transmit the measurement report including the measured quality to the cellular network 500. The electronic device 101 may be connected with the node having the large SCS through the above-described method, and may smoothly perform the service requiring the low latency.

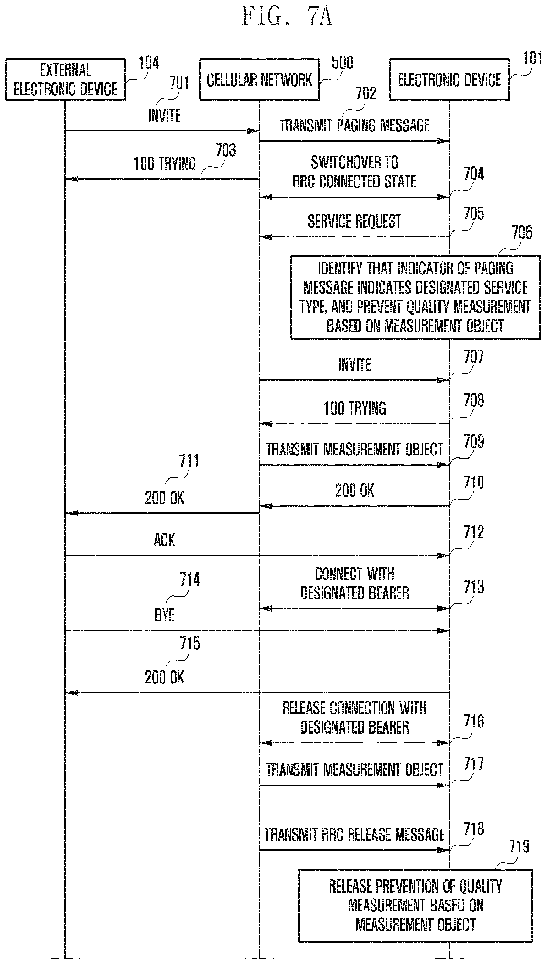

FIG. 7A is a diagram illustrating an embodiment in which an electronic device according to an embodiment prevents measurement of a quality based on a measurement object when an indicator included in a paging message satisfies a designated service type.

Hereinafter, for convenience in explanation, it is assumed that the external electronic device (e.g., external electronic device 104 of FIG. 1) is a mobile originated (MO) that requests a call connection (or transmits a call) from the electronic device (e.g., electronic device 101 of FIG. 1), and the electronic device 101 is a mobile terminated (MT) that receives a call connection request (or receives a call).

In step 701, the external electronic device 104 may transmit an INVITE message to a cellular network 500.

The INVITE message may be a message for requesting a call connection from the electronic device 101, and may be a message defined in the session initiation protocol (SIP).

The call connection request message may include quality information of voice data or video data that can be transmitted by the external electronic device 104. For example, the quality information of the voice data may include a sampling rate of the voice data that can be generated by using a microphone, a sampling rate of the voice data that can be transmitted through the cellular network 500, or a sampling rate of the voice data that can be received by the external electronic device. The quality information of the video data may include a resolution of the video data that can be generated by using a camera, a resolution of the video data that can be transmitted through the cellular network, or a resolution of the video data that can be received by the external electronic device 104.

In step 702, the cellular network 500 may transmit the paging message to the electronic device 101.

The cellular network 500 may identify that the electronic device 101 is in a state where the RRC connection is released (e.g., RRC inactive state or RRC idle state), and may transmit the paging message to the electronic device 101 so that the electronic device 101 can be switched to a state where the RRC is connected (e.g., RRC connected state) and the electronic device 101 can receive the INVITE message.

The cellular network 500 may transmit the paging message to the electronic device 101 by using a paging channel. The paging channel is a channel that is used to periodically transmit network-related information to electronic devices connected to the first node 450, and may be a channel included in a control plane.

The cellular network 500 may include an indicator indicating a service type for data transmission and/or reception in the paging message. The indicator may be information indicating the type of the service corresponding to the data to be received by the electronic device 101 as the electronic device 101 is switched to the RRC connected state after the reception of the paging message. According to an example, the indicator may be included in a paging cause field of the paging message. The paging cause field is a feature proposed in 3GPP TS. 36.331 or TS. 38.331 for the electronic device supporting a plurality of USIMs, and may be a field in which information on the cause of transmission of the paging message is included.

If the electronic device 101 can decode the paging cause field, the cellular network 500 may transmit the paging message including the paging cause field to the electronic device 101. Before receiving the paging message, the electronic device 101 may include information indicating that the electronic device 101 can decode the paging cause field in an attach request and/or a registration request from the cellular network 500 or the first node 450 to transmit the attach request and/or the registration request, and the cellular network 500 may identify that the electronic device 101 can decode the paging cause field based on the information indicating that the electronic device 101 can decode the paging cause field, which is included in the attach request and/or the registration request from the first node 450.

In step 703, the cellular network 500 may transmit 100 TRYING messages to the external electronic device 104.

The 100 TRYING messages are messages indicating that the request (e.g., INVITE message) transmitted by the external electronic device 104 is being processed (or is being transmitted to the electronic device 101), and may be messages defined in the SIP.

The order of steps 702 and 703 may be changed in a manner that step 703 may be performed prior to step 702, or step 702 and step 703 may be simultaneously performed.

In step 704, the electronic device 101 may perform a service request from the cellular network 500 in accordance with the reception of the paging message. The service request from the cellular network 500 may include requesting the electronic device 101 to be switched from the RRC release state to the RRC connected state.

In step 705, the electronic device 101 and the cellular network 500 may perform a series of operations so that the electronic device 101 can be switched to the RRC connected state.

The electronic device 101 may measure the quality of the signal being broadcasted by the node (e.g., first node 450) included in the cellular network 500, and if the quality satisfies a designated condition, the electronic device 101 may perform a series of operations for being connected with the first node 450, and may receive an RRC reconfiguration message from the first node 450.

In step 706, the electronic device 101 may identify that the indicator of the paging message indicates the designated service type, and may prevent (or release) the measurement of the quality based on the measurement object.

The electronic device 101 may receive the paging message, and may identify the service type for transmission or reception of the data included in the paging message.

The electronic device 101 may identify whether the identified service type coincides with the designated service type.

The designated service type may mean the type of the service in which the electronic device 101 is connected with one node (or master node) (e.g., first node 450 of FIG. 5A) and can perform the data transmission or reception.

For example, the video call and/or the voice call may be the service for performing the data transmission and/or reception through one node (or master node), and the video call and/or the voice call may be a designated service type.

As another example, a communication service without heavy data traffics may be a service capable of performing a smooth service even if the data transmission and/or reception is performed through one node (or master node), and the service without heavy data traffics may be the designated service type.

In addition, the service capable of performing the data transmission and/or reception through one node (e.g., master node) other than at least two nodes (e.g., master node and secondary node) may be the designated service type.

The electronic device 101 may identify that the indicator included in the paging message indicates the designated service type, and may prevent (or block) the measurement of the quality of the signal using the measurement object.

The prevention (or blocking) of the measurement of the quality of the signal using the measurement object may include the prevention (or blocking) of the measurement of the quality (e.g., reference signals received power (RSRP)) of the signal being broadcasted by another node (e.g., second node 410) adjacent to the first node 450 included in the measurement object and/or the prevention (or blocking) of the transmission of the measurement report including the measurement result of the quality of the signal to the first node 450.

Step 706 may be performed any time after step 702. According to an example, the electronic device 101 may prevent the measurement of the quality based on the measurement object based on the identification that the indicator of the paging message indicates the designated service type before the electronic device 101 is switched to the RRC connected state after receiving the paging message from the cellular network 500.

In step 707, the electronic device 101 may receive, from the cellular network 500, an INVITE message transmitted by the external electronic device 104 in the RRC connected state.

In step 708, the electronic device 101 may transmit, to the cellular network 500, 100 TRYING messages in response to the reception of the INVITE message.

The 100 TRYING messages are messages indicating that the request (e.g., INVITE message) transmitted by the external electronic device 104 is being processed (or is being transmitted to the electronic device 101), and may be messages defined in the SIP.

In step 709, the cellular network 500 may transmit the measurement object to the electronic device 101.

The measurement object may include information of a node adjacent to the first node 450 that is the node connected with the electronic device 101. The measurement object may include various kinds of information including identification information of the second node 410 that is the node adjacent to the first node 450, a frequency band of a signal that can be transmitted or received by the second node 410, a frequency bandwidth of a signal that can be transmitted or received by the second node 410, and/or information of subcarrier spacing (SCS). The electronic device 101 in the RRC connected state may receive a measurement object (or measobject) included in the RRC reconfiguration message received through the first node 450.

If the service type included in the paging message is the same as the designated service type, the electronic device 101 may reduce (or prevent) the power consumption that may occur due to the quality measurement of the second node 410 and/or the connection with the second node 410 by preventing (or blocking) the measurement of the quality of the signal using the measurement object even if the measurement object is received.

In step 710, the electronic device 101 may transmit, to the cellular network 500, 200 OK messages that are messages indicating that the processing of the request (e.g., INVITE message) of the external electronic device 104 has succeeded.

In step 711, the cellular network 500 may transmit the 200 OK messages received from the electronic device 101 to the external electronic device 104.

In step 712, the external electronic device 104 may transmit a response message (ack message indicating reception of the 200 OK messages) corresponding to the 200 OK messages to the electronic device 101.

The processing success for the request from the external electronic device 104 may include that the electronic device 101 has received and processed the call request requested by the external electronic device 104. The electronic device 101 may generate and configure a call channel between the external electronic device 104 and the electronic device 101 in accordance with the processing success for the request from the external electronic device 104.

As parts of generation and configuration of a call channel, in order to determine a bit rate of voice data and video data being transmitted and received during a call connection, a compression format (codec), or quality (e.g., this may mean various variables representing qualities for voice data and video data including a sampling rate in case of the voice data and a resolution in case of the video data), the electronic device 101 and the external electronic device 104 may proceed with mutual negotiation by using a method defined in a session description protocol (SDP). The electronic device 101 and the external electronic device 104 may determine the characteristics of the voice data or video data to be transmitted through the mutual negotiation, and may transmit or receive the voice data or the video data by using the determined characteristics.

The cellular network 500 may be configured to perform a video call and/or a voice call through a master node (e.g., first node 450).

In step 713, the electronic device 101 may be connected with the cellular network 500 through the designated bearer.

In setting a call channel, the electronic device 101 and the external electronic device 104 may transmit the voice data and/or the video data through the bearer designated by the cellular network 500. The designated bearer may mean a path which is generated between the first node 450 and the electronic device 101 and which can transmit and/or receive the data. The voice call and/or the video call may be performed through the master node (e.g., first node 450), and the secondary node (e.g., second node 410) may not transmit or receive the data related to the voice call and/or the video call.

In step 714, the external electronic device 104 may end the call between the electronic device 101 and the external electronic device 104, and may transmit a message (e.g., BYE message) indicating the end of the call to the electronic device 101.

In step 715, the electronic device 101 may transmit, to the external electronic device 104, a message (ack message) indicating that the message indicating the end of the call has been received.

In step 716, the electronic device 101 may release the connection of the designated bearer. The electronic device 101 may release the connection of the designated bearer in accordance with the end of the call.

In step 717, the cellular network 500 may transmit the measurement object to the electronic device 101 in accordance with the release of the connection of the designated bearer.

The measurement object may include information of the node adjacent to the first node 450 that is the node connected with the electronic device 101. The measurement object may include various kinds of information including identification information of the second node 410 that is the node adjacent to the first node 450, the frequency band of a signal that can be transmitted or received by the second node 410, the frequency bandwidth of the signal that can be transmitted or received by the second node 410, and/or information of subcarrier spacing (SCS). The electronic device 101 in the RRC connected state may receive a measurement object (or measobject) included in the RRC reconfiguration message received through the first node 450.

If the service type included in the paging message is the same as the designated service type, the electronic device 101 may reduce (or prevent) the power consumption that may occur due to the quality measurement of the second node 410 and/or the connection with the second node 410 by preventing (or blocking) the measurement of the quality of the signal using the measurement object even if the measurement object is received.

In step 718, the cellular network 500 may transmit an RRC release message that is a message indicating the release of the RRC connection to the electronic device 101.

If the electronic device 101 does not perform the data transmission and/or reception while the time set by the RRC inactivity timer expires, the cellular network 500 may transmit the RRC release message that is the message indicating the release of the RRC connection to the electronic device 101.

In step 719, the electronic device 101 may release the connection with the second node 410 in accordance with the reception of the RRC release message.

In accordance with the reception of the RRC release message from the cellular network 500, the electronic device 101 may release the prevention (or blocking) of the measurement of the quality of the signal using the measurement object. The reception of the RRC release message may occur in case that the electronic device 101 does not perform the data transmission and/or reception with respect to the cellular network 500 over a designated time (e.g., time set by the RRC inactivity timer). Accordingly, for relatively fast node search and connection in accordance with the performing of a new service, the electronic device 101 may release the prevention (or blocking) of the measurement of the quality of the signal using the measurement object.

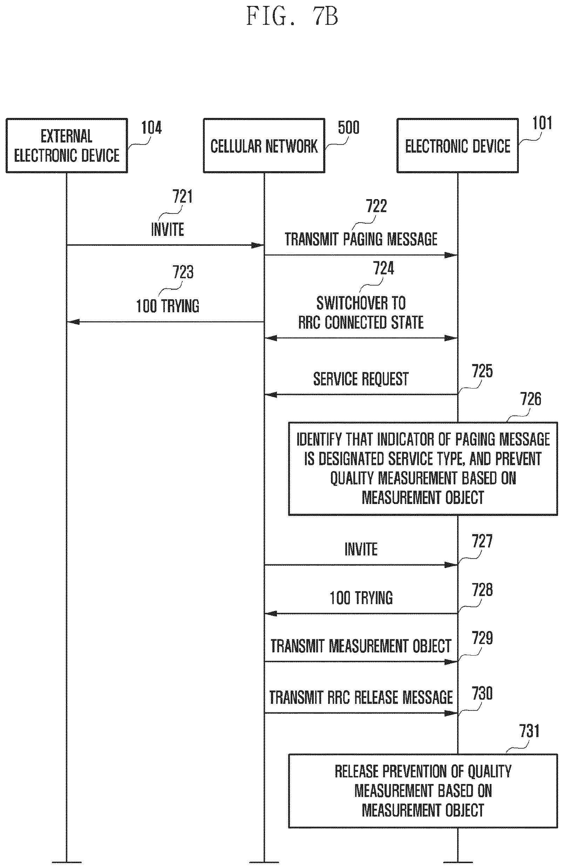

FIG. 7B is a diagram illustrating an embodiment in which an electronic device according to an embodiment prevents measurement of a quality based on a measurement object when an indicator included in a paging message satisfies a designated service type.

Hereinafter, for convenience in explanation, it is assumed that the external electronic device (e.g., external electronic device 104 of FIG. 1) is a mobile originated that requests a call connection (or transmits a call) from the electronic device (e.g., electronic device 101 of FIG. 1), and the electronic device 101 is a mobile terminated that receives a call connection request (or receives a call).

In step 721, the external electronic device 104 may transmit an INVITE message to a cellular network 500.

The INVITE message may be a message for requesting a call connection from the electronic device 101, and may be a message defined in the session initiation protocol (SIP).

The call connection request message may include quality information of voice data or video data that can be transmitted by the external electronic device 104. For example, the quality information of the voice data may include a sampling rate of the voice data that can be generated by using a microphone, a sampling rate of the voice data that can be transmitted through the cellular network 500, or a sampling rate of the voice data that can be received by the external electronic device. The quality information of the video data may include a resolution of the video data that can be generated by using a camera, a resolution of the video data that can be transmitted through the cellular network, or a resolution of the video data that can be received by the external electronic device 104.

In step 722, the cellular network 500 may transmit the paging message to the electronic device 101.

The cellular network 500 may identify that the electronic device 101 is in a state where the RRC connection is released (e.g., RRC inactive state or RRC idle state), and may transmit the paging message to the electronic device 101 so that the electronic device 101 can be switched to a state where the RRC is connected (e.g., RRC connected state) and the electronic device 101 can receive the INVITE message.

The cellular network 500 may transmit the paging message to the electronic device 101 by using a paging channel. The paging channel is a channel that is used to periodically transmit network-related information to electronic devices connected to the first node 450, and may be a channel included in a control plane.

The cellular network 500 may include an indicator indicating a service type for data transmission and/or reception in the paging message. The indicator may be information indicating the type of the service corresponding to the data to be received by the electronic device 101 as the electronic device 101 is switched to the RRC connected state after the reception of the paging message. According to an example, the indicator may be included in a paging cause field of the paging message. The paging cause field is a feature proposed in 3GPP TS. 36.331 or TS. 38.331 for the electronic device supporting a plurality of USIMs, and may be a field in which information on the cause of transmission of the paging message is included.

If the electronic device 101 can decode the paging cause field, the cellular network 500 may transmit the paging message including the paging cause field to the electronic device 101. Before receiving the paging message, the electronic device 101 may include information indicating that the electronic device 101 can decode the paging cause field in an attach request and/or a registration request from the cellular network 500 or the first node 450 to transmit the attach request and/or the registration request, and the cellular network 500 may identify that the electronic device 101 can decode the paging cause field based on the information indicating that the electronic device 101 can decode the paging cause field, which is included in the attach request and/or the registration request from the first node 450.

In step 723, the cellular network 500 may transmit 100 TRYING messages to the external electronic device 104.

The 100 TRYING messages are messages indicating that the request (e.g., INVITE message) transmitted by the external electronic device 104 is being processed (or is being transmitted to the electronic device 101), and may be messages defined in the SIP.

The order of steps 722 and 723 may be changed in a manner that step 723 may be performed prior to step 722, or step 722 and step 723 may be simultaneously performed.

In step 724, the electronic device 101 and the cellular network 500 may perform a series of operations so that the electronic device 101 can be switched to the RRC connected state.

The electronic device 101 may measure the quality of the signal being broadcasted by the node (e.g., first node 450) included in the cellular network 500, and if the quality satisfies a designated condition, the electronic device 101 may perform a series of operations for being connected with the first node 450, and may receive an RRC reconfiguration message from the first node 450.

In step 725, the electronic device 101 may perform a service request from the cellular network 500 in accordance with the reception of the paging message. The service request from the cellular network 500 may include requesting the electronic device 101 to be switched from the RRC release state to the RRC connected state.

In step 726, the electronic device 101 may identify that the indicator of the paging message indicates the designated service type, and may prevent (or release) the measurement of the quality based on the measurement object.

The electronic device 101 may receive the paging message, and may identify the service type for transmission or reception of the data included in the paging message.

The electronic device 101 may identify whether the identified service type coincides with the designated service type.

The designated service type may mean the type of the service in which the electronic device 101 is connected with one node (or master node) (e.g., first node 450 of FIG. 5A) and can perform the data transmission or reception.

For example, the video call and/or the voice call may be the service for performing the data transmission and/or reception through one node (or master node), and the video call and/or the voice call may be a designated service type.

As another example, a communication service without heavy data traffics may be a service capable of performing a smooth service even if the data transmission and/or reception is performed through one node (or master node), and the service without heavy data traffics may be the designated service type.

The electronic device 101 may identify that the indicator included in the paging message indicates the designated service type, and may prevent (or block) the measurement of the quality of the signal using the measurement object.

The prevention (or blocking) of the measurement of the quality of the signal using the measurement object may include the prevention (or blocking) of the measurement of the quality (e.g., reference signals received power (RSRP)) of the signal being broadcasted by another node (e.g., second node 410) adjacent to the first node 450 included in the measurement object and/or the prevention (or blocking) of the transmission of the measurement report including the measurement result of the quality of the signal to the first node 450.

Step 726 may be performed any time after step 722. According to an example, the electronic device 101 may prevent the measurement of the quality based on the measurement object based on the identification that the indicator of the paging message indicates the designated service type before the electronic device 101 is switched to the RRC connected state after receiving the paging message from the cellular network 500.

In step 727, the electronic device 101 may receive, from the cellular network 500, an INVITE message transmitted by the external electronic device 104 in the RRC connected state.

In step 728, the electronic device 101 may transmit, to the cellular network 500, 100 TRYING messages in response to the reception of the INVITE message.

The 100 TRYING messages are messages indicating that the request (e.g., INVITE message) transmitted by the external electronic device 104 is being processed (or is being transmitted to the electronic device 101), and may be messages defined in the SIP.

In step 729, the cellular network 500 may transmit the measurement object to the electronic device 101.

The measurement object may include information of a node adjacent to the first node 450 that is the node connected with the electronic device 101. The measurement object may include various kinds of information including identification information of the second node 410 that is the node adjacent to the first node 450, a frequency band of a signal that can be transmitted or received by the second node 410, a frequency bandwidth of a signal that can be transmitted or received by the second node 410, and/or information of subcarrier spacing (SCS). The electronic device 101 in the RRC connected state may receive a measurement object (or measobject) included in the RRC reconfiguration message received through the first node 450.

If the service type included in the paging message is the same as the designated service type, the electronic device 101 may reduce (or prevent) the power consumption that may occur due to the quality measurement of the second node 410 and/or the connection with the second node 410 by preventing (or blocking) the measurement of the quality of the signal using the measurement object even if the measurement object is received.

In FIG. 7B, it is assumed it is assumed that the electronic device 101 has received a call connection request from the external electronic device 104, but does not transmit a message corresponding to the call connection request to the cellular network 500 for a designated time.

If the transmission and/or reception of data through the second node 410 do not occur for a designated time (e.g., time set by an RRC inactivity timer), the electronic device 101 may release the connection with the second node 410. The RRC inactivity timer may be set by the cellular network 500, and may be implemented on the cellular network 500. If the time set by the RRC inactivity timer expires, the cellular network 500 may transmit a message for releasing the connection to the electronic device 101.

In step 730, the cellular network 500 may transmit a message for requesting the release of the RRC connection to the electronic device 101 in accordance with the expiration of the RRC inactivity timer.

The electronic device 101 may release the connection with the second node 410 in accordance with the reception of the RRC release message.

In step 731, the electronic device 101 may release the prevention (or blocking) of the measurement of the quality of the signal using the measurement object in accordance with the reception of the RRC release message from the cellular network 500. The reception of the RRC release message may occur in case that the electronic device 101 does not perform the data transmission and/or reception with respect to the cellular network 500 over a designated time (e.g., time set by the RRC inactivity timer). Accordingly, for relatively fast node search and connection in accordance with the performing of a new service, the electronic device 101 may release the prevention (or blocking) of the measurement of the quality of the signal using the measurement object.

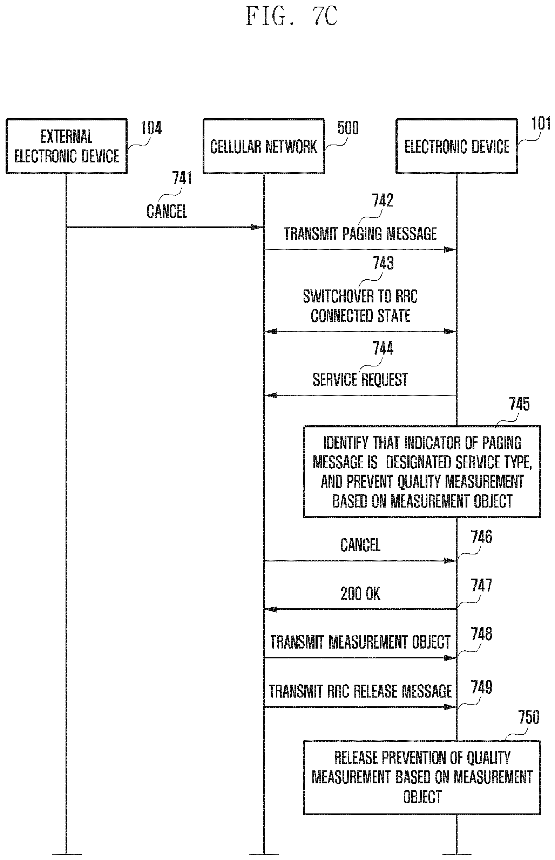

FIG. 7C is a diagram illustrating an embodiment in which an electronic device according to an embodiment prevents measurement of a quality based on a measurement object when an indicator included in a paging message satisfies a designated service type.

Hereinafter, for convenience in explanation, it is assumed that the external electronic device (e.g., external electronic device 104 of FIG. 1) is a mobile originated (MO) that requests a call connection (or transmits a call) from the electronic device (e.g., electronic device 101 of FIG. 1), and the electronic device 101 is a mobile terminated (MT) that receives a call connection request (or receives a call).

In step 741, the external electronic device 104 may transmit a message (e.g., CANCEL message) for canceling a call connection request to a cellular network 500.

In step 742, the cellular network 500 may transmit the paging message to the electronic device 101.

The cellular network 500 may identify that the electronic device 101 is in a state where the RRC connection is released (e.g., RRC inactive state or RRC idle state), and may transmit the paging message to the electronic device 101 so that the electronic device 101 can be switched to a state where the RRC is connected (e.g., RRC connected state) and the electronic device 101 can receive the CANCEL message.

The cellular network 500 may identify that the electronic device 101 is in a state where the RRC connection is released (e.g., RRC inactive state or RRC idle state), and may transmit the paging message to the electronic device 101 so that the electronic device 101 can be switched to a state where the RRC is connected (e.g., RRC connected state) and the electronic device 101 can receive the INVITE message.

The cellular network 500 may transmit the paging message to the electronic device 101 by using a paging channel. The paging channel is a channel that is used to periodically transmit network-related information to electronic devices connected to the first node 450, and may be a channel included in a control plane.

The cellular network 500 may transmit the paging message to the electronic device 101 by using a paging channel. The paging channel is a channel being used to periodically transmit network-related information to electronic devices connected with the first node 450, and may be a channel included in a control plane.

The cellular network 500 may include an indicator indicating a service type for data transmission and/or reception in the paging message. The indicator may be information indicating the type of the service corresponding to the data to be received by the electronic device 101 as the electronic device 101 is switched to the RRC connected state after the reception of the paging message. According to an example, the indicator may be included in a paging cause field of the paging message. The paging cause field is a feature proposed in 3GPP TS. 36.331 or TS. 38.331 for the electronic device supporting a plurality of USIMs, and may be a field in which information on the cause of transmission of the paging message is included.

If the electronic device 101 can decode the paging cause field, the cellular network 500 may transmit the paging message including the paging cause field to the electronic device 101. Before receiving the paging message, the electronic device 101 may include information indicating that the electronic device 101 can decode the paging cause field in an attach request and/or a registration request from the cellular network 500 or the first node 450 to transmit the attach request and/or the registration request, and the cellular network 500 may identify that the electronic device 101 can decode the paging cause field based on the information indicating that the electronic device 101 can decode the paging cause field, which is included in the attach request and/or the registration request from the first node 450.

In step 743, the electronic device 101 and the cellular network 500 may perform a series of operations so that the electronic device 101 can be switched to the RRC connected state.

The electronic device 101 may measure the quality of the signal being broadcasted by the node (e.g., first node 450) included in the cellular network 500, and if the quality satisfies a designated condition, the electronic device 101 may perform a series of operations for being connected with the first node 450, and may receive an RRC reconfiguration message from the first node 450.

In step 744, the electronic device 101 may perform a service request from the cellular network 500 in accordance with the switchover to the RRC connected state.

In step 745, the electronic device 101 may identify that the indicator of the paging message indicates the designated service type, and may prevent (or release) the measurement of the quality based on the measurement object.

The electronic device 101 may receive the paging message, and may identify the service type for transmission or reception of the data included in the paging message.

The electronic device 101 may identify whether the identified service type coincides with the designated service type.

The designated service type may mean the type of the service in which the electronic device 101 is connected with one node (or master node) (e.g., first node 450 of FIG. 5A) and can perform the data transmission or reception.

For example, the video call and/or the voice call may be the service for performing the data transmission and/or reception through one node (or master node), and the video call and/or the voice call may be a designated service type.

As another example, a communication service without heavy data traffics may be a service capable of performing a smooth service even if the data transmission and/or reception is performed through one node (or master node), and the service without heavy data traffics may be the designated service type.

In addition, a service capable of performing the data transmission and/or reception through one node (e.g., master node) other than at least two nodes (e.g., master node and secondary node).

The electronic device 101 may identify that the indicator included in the paging message indicates the designated service type, and may prevent (or block) the measurement of the quality of the signal using the measurement object.

The prevention (or blocking) of the measurement of the quality of the signal using the measurement object may include the prevention (or blocking) of the measurement of the quality (e.g., reference signals received power (RSRP)) of the signal being broadcasted by another node (e.g., second node 410) adjacent to the first node 450 included in the measurement object and/or the prevention (or blocking) of the transmission of the measurement report including the measurement result of the quality of the signal to the first node 450.

Step 745 may be performed any time after step 742. According to an example, the electronic device 101 may prevent the measurement of the quality based on the measurement object based on the identification that the indicator of the paging message indicates the designated service type before the electronic device 101 is switched to the RRC connected state after receiving the paging message from the cellular network 500.

In step 746, the electronic device 101 may receive, from the cellular network 500, the CANCEL message transmitted by the external electronic device 104 in the RRC connected state.

In step 747, the electronic device 101 may transmit, to the cellular network 500, 200 OK messages that are messages indicating that the processing of the request (e.g., CANCEL message) from the external electronic device 104 has succeeded.

In step 748, the cellular network 500 may transmit the measurement object to the electronic device 101 in accordance with the canceling of the call connection request.

The measurement object may include information of a node adjacent to the first node 450 that is the node connected with the electronic device 101. The measurement object may include various kinds of information including identification information of the second node 410 that is the node adjacent to the first node 450, a frequency band of a signal that can be transmitted or received by the second node 410, a frequency bandwidth of a signal that can be transmitted or received by the second node 410, and/or information of subcarrier spacing (SCS). The electronic device 101 in the RRC connected state may receive a measurement object (or measobject) included in the RRC reconfiguration message received through the first node 450.

If the service type included in the paging message is the same as the designated service type, the electronic device 101 may reduce (or prevent) the power consumption that may occur due to the quality measurement of the second node 410 and/or the connection with the second node 410 by preventing (or blocking) the measurement of the quality of the signal using the measurement object even if the measurement object is received.

If the transmission and/or reception of data through the second node 410 do not occur for a designated time (e.g., time set by an RRC inactivity timer), the electronic device 101 may release the connection with the second node 410. The RRC inactivity timer may be set by the cellular network 500, and may be implemented on the cellular network 500. If the time set by the RRC inactivity timer expires, the cellular network 500 may transmit a message for releasing the connection to the electronic device 101.

In step 749, the cellular network 500 may transmit a message for requesting the release of the RRC connection to the electronic device 101 in accordance with the expiration of the RRC inactivity timer.

The electronic device 101 may release the connection with the second node 410 in accordance with the reception of the RRC release message.

In step 750, the electronic device 101 may release the prevention (or blocking) of the measurement of the quality of the signal using the measurement object in accordance with the reception of the RRC release message from the cellular network 500. The reception of the RRC release message may occur in case that the electronic device 101 does not perform the data transmission and/or reception with respect to the cellular network 500 over a designated time (e.g., time set by the RRC inactivity timer). Accordingly, for relatively fast node search and connection in accordance with the performing of a new service, the electronic device 101 may release the prevention (or blocking) of the measurement of the quality of the signal using the measurement object.

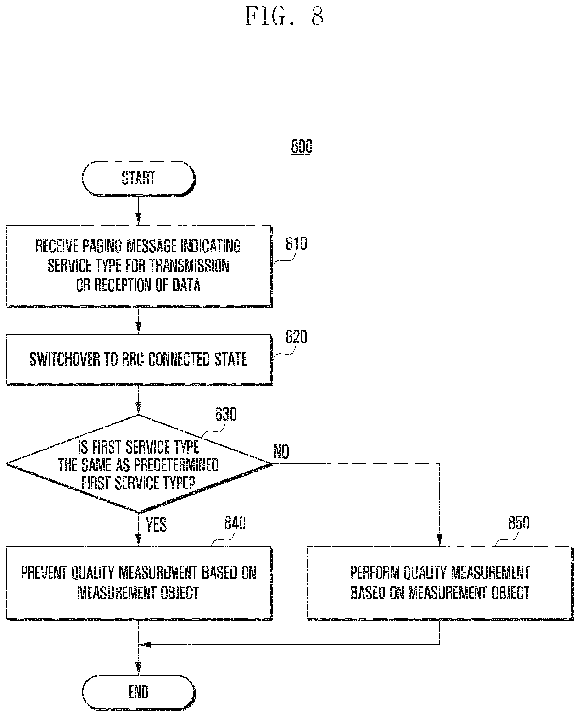

FIG. 8 is a diagram illustrating an embodiment 800 in which an electronic device according to an embodiment prevents measurement of a quality based on a measurement object in case that a service type included in a paging message is the same as a predetermined service type.

In step 810, an electronic device (e.g., electronic device 101 of FIG. 6) may receive a paging message indicating a service type for transmission or reception of data.

When the electronic device 101 is not in an RRC connected state (or when the electronic device 101 is in an RRC idle state or in an RRC inactive state), the electronic device 101 may receive the paging message form a cellular network (e.g., cellular network 500 of FIG. 5A). The paging message may be a message for switching the electronic device 101 to the RRC connected state, and may be transmitted when the cellular network 500 intends to transmit data to the electronic device 101.

The cellular network 500 may transmit the paging message to the electronic device 101 by using a paging channel. The paging channel is a channel that is used to periodically transmit network-related information to electronic devices connected to the first node 450, and may be a channel included in a control plane.

The cellular network 500 may include an indicator indicating a service type for data transmission and/or reception in the paging message. The indicator may be information indicating the type of the service corresponding to the data to be received by the electronic device 101 as the electronic device 101 is switched to the RRC connected state after the reception of the paging message. According to an example, the indicator may be included in a paging cause field of the paging message. The paging cause field is a feature proposed in 3GPP TS. 36.331 or TS. 38.331 for the electronic device supporting a plurality of USIMs, and may be a field in which information on the cause of transmission of the paging message is included.

If the electronic device 101 can decode the paging cause field, the cellular network 500 may transmit the paging message including the paging cause field to the electronic device 101. Before receiving the paging message, the electronic device 101 may include information indicating that the electronic device 101 can decode the paging cause field in an attach request and/or a registration request from the cellular network 500 or the first node 450 to transmit the attach request and/or the registration request, and the cellular network 500 may identify that the electronic device 101 can decode the paging cause field based on the information indicating that the electronic device 101 can decode the paging cause field, which is included in the attach request and/or the registration request from the first node 450.

In step 820, the electronic device 101 may be switched to the RRC connected state in accordance with the reception of the paging message.

The electronic device 101 may receive the paging message, and may make the electronic device be switched from the RRC idle state (or RRC inactive state) to the RRC connected state. In the RRC connected state, the electronic device 101 may receive the data being transmitted by the cellular network 500 through the first node 450. The first node 450 is a node supporting multi-RAT dual connectivity (MR-DC), and the electronic device 101 may be simultaneously connected with the first node 450 and another node adjacent to the first node 450, and may transmit and/or receive the data.

In accordance with the switchover to the RRC connected state, the electronic device 101 may receive the RRC reconfiguration message from the cellular network 500. The RRC reconfiguration message may include a measurement object including information on the node adjacent to the first node 450 that is the node connected with the electronic device 101.

The measurement object may be data that is used to measure the quality of the signal being broadcasted by at least one node adjacent to the first node 450 that is the node connected with the electronic device 101. The measurement object may include various kinds of information including identification information of the second node (e.g., second node 410 of FIG. 5A) that is the node adjacent to the first node 450, a frequency band of a signal that can be transmitted or received by the second node 410, a frequency bandwidth of a signal that can be transmitted or received by the second node 410, and/or information of subcarrier spacing (SCS). The measurement object may be for the electronic device 101 to transmit and/or receive the data in the MR-DC method. In case that the electronic device 101 measures the quality of the signal being broadcasted by another node by using the measurement object, and transmits the measurement report including the measured quality to the cellular network 500, the electronic device 101 may be connected to the first node 450 and the second node 410 by permission of the cellular network 500, and may transmit or receive the data.

The electronic device 101, in the RRC connected state, may identify the measurement object (or measobject) included in the RRC reconfiguration message received through the first node 450.

In step 830, the electronic device 101 may identify whether the service type included in the paging message is the same as a predetermined first service type.

The first service type may mean the type of the service in which the electronic device 101 is connected to one node (or master node) (e.g., first node 450 of FIG. 5A), and is able to perform the data transmission or reception.

For example, a video call and/or a voice call may be a service for performing data transmission and/or reception through one node (or master node), and the video call and/or the voice call may be a first service type.

As another example, a communication service without heavy data traffics may be a service capable of performing a smooth service even if the data transmission and/or reception is performed through one node (or master node), and the service without heavy data traffics may be the first service type.

In addition, the service capable of performing the data transmission and/or reception through one node (e.g., master node) other than at least two nodes (e.g., master node and secondary node) may be the first service type.

In step 840, the electronic device 101 may prevent the measurement of the quality based on the measurement object, based on that the service type included in the paging message is the same as the first service type (step 830-Y).

The prevention (or blocking) of the measurement of the quality of the signal using the measurement object may include the prevention (or blocking) of the measurement of the quality (e.g., reference signals received power (RSRP)) of the signal being broadcasted by another node (e.g., second node 410) adjacent to the first node 450 included in the measurement object and/or the prevention (or blocking) of the transmission of the measurement report including the measurement result of the quality of the signal to the first node 450.

If the service type included in the paging message is the same as the first service type, the service being performed by the electronic device 101 after the reception of the paging message may be a service for performing the data transmission and/or reception through one node (e.g., first node 450), and may be a service in which the data transmission and/or reception through another node (e.g., second node 410) do not occur.

Accordingly, if the service type included in the paging message is the same as the first service type, the electronic device 101 may reduce (or prevent) the power consumption that may occur due to the quality measurement of the second node 410 and/or the connection with the second node 410 by preventing (or blocking) the measurement of the quality of the signal using the measurement object.

Further, the prevention (or blocking) of the measurement of the quality of the signal using the measurement object may include the prevention (or blocking) of the transmission of the measurement report including the measurement result of the quality of the signal to the first node 450 although the quality (e.g., reference signals received power (RSRP)) of the signal being broadcasted by another node (e.g., second node 410) adjacent to the first node 450 included in the measurement object is measured.

If the service type included in the paging message is the same as the first service type, the service being performed by the electronic device 101 after the reception of the paging message may be a service for performing the data transmission and/or reception through one node (e.g., first node 450), and may be a service in which the data transmission and/or reception through another node (e.g., second node 410) do not occur. Accordingly, if the service type included in the paging message is the same as the first service type, the electronic device 101 may reduce (or prevent) the power consumption that may occur due to the connection with the second node 410 by preventing (or blocking) the measurement of the quality of the signal using the measurement object.

If the service type included in the paging message is the same as the first service type, the electronic device 101 may prevent (or block) the measurement of the quality of the signal using the measurement object. However, if the electronic device 101 satisfies the designated condition, the electronic device 101 may release the prevention (or blocking) of the measurement of the quality of the signal using the measurement object.

The designated condition may be a condition for releasing the prevention of the measurement of the quality of the signal using the measurement object.

According to an example, the designated condition may include a condition that the electronic device 101 receives the RRC release message from the cellular network 500. As the RRC release message is received from the cellular network 500, the electronic device 101 may release the prevention (or blocking) of the measurement of the quality of the signal using the measurement object. The reception of the RRC release message may occur in case that the electronic device 101 does not perform the data transmission and/or reception with respect to the cellular network 500 over a designated time (e.g., time set by the RRC inactivity timer). Accordingly, for relatively fast node search and connection in accordance with the performing of a new service, the electronic device 101 may prevent (or block) the measurement of the quality of the signal using the measurement object.

According to an embodiment, the designated condition may include the condition that the electronic device 101 performs the transmission and/or reception of the data corresponding to the second service type that is different from the first service type. In order to perform the transmission and/or reception of the data corresponding to the second service type, the electronic device 101 may require the connection with the node (e.g., second node 410) that is different from the currently connected node (e.g., first node 450). For the connection with the second node 410, it is required to measure the quality of the signal being broadcasted by the second node 410 and to transmit the measurement report including the measured quality to the first node, and thus the electronic device 101 may release the prevention (or blocking) of the measurement of the quality of the signal using the measurement object for the relatively fast node search and connection.

The electronic device 101 may identify the transmission and/or reception of data corresponding to the second service type that is different from the first service type in a manner that the communication processor 620 identifies that a packet data network (PDN) to which the data to be transmitted or received is to move is the PDN different from the currently connected PDN. The electronic device 101 may identify that the packet data network (PDN) to which the data to be transmitted or received is to move is the PDN different from the currently connected PDN in a manner of comparing identification information of a resource block being used by the currently connected PDN with identification information of a resource block being used by the PDN being used by the data to be transmitted or received.

In step 850, the electronic device 101 may perform the measurement of the quality based on the measurement object based on that the service type included in the paging message is not the same as the predetermined first service type (step 830-N).

The performing (or maintaining) of the measurement of the quality of the signal using the measurement object may include the performing of the measurement of the quality (e.g., reference signals received power (RSRP) of the signal being broadcasted by another node (e.g., second node 410) adjacent to the first node 450 included in the measurement object and/or the performing of the transmission of the measurement report including the measurement result of the quality of the signal to the first node 450.

If the service type included in the paging message is different from the first service type, the service being performed by the electronic device 101 after the reception of the paging message may be a service in which the data transmission and/or reception may occur through not only the node (e.g., first node 450) connected with the electronic device but also another node (e.g., second node 410). Accordingly, if the service type included in the paging message is different from the first service type, the electronic device 101 may improve the quality of the service by performing the measurement of the quality of the signal using the measurement object.

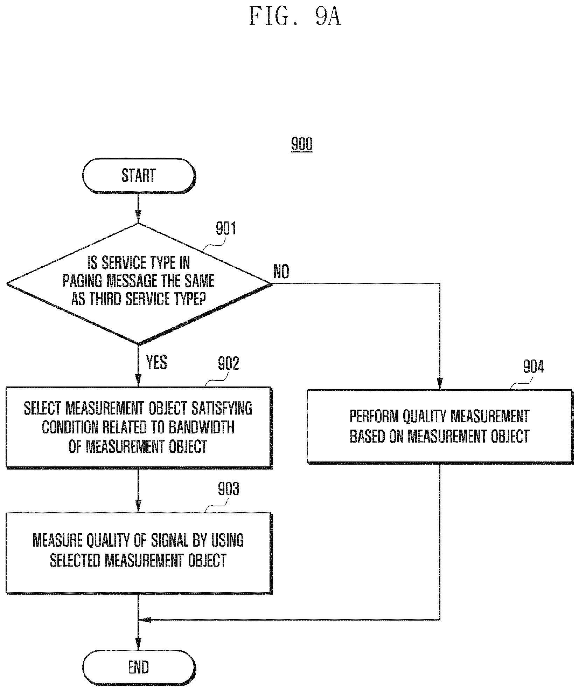

FIG. 9A is a diagram illustrating an embodiment 900 in which an electronic device according to an embodiment identifies a measurement object satisfying a condition related to a bandwidth and performs measurement of a quality in case that a service type included in a paging message is the same as a predetermined second service type.

In step 901, an electronic device (e.g., electronic device 101 of FIG. 6) may identify whether a service type in a paging message is the same as a third service type.

The third service type may include a service type having a relatively large traffic of data to be transmitted or received. For example, a service for transmitting or receiving high-quality content may be the third service type.

In step 902, the electronic device 101 may select a measurement object that satisfies a condition related to a bandwidth among measurement objects based on that the service type in the paging message is the same as the third service type (step 901-Y).

The condition related to the bandwidth may include a condition supporting the bandwidth equal to or larger than a designated size.

The electronic device 101 may select the measurement object including information of a node that supports a bandwidth equal to or larger than a designated size among one or more measurement objects in response to the identity of the service type included in the paging message (or indicator) and the third service type. The designated size may mean the bandwidth in which the traffic of the data to be transmitted or received can perform a relatively large service.

The condition related to the bandwidth may include a condition having the largest bandwidth among bandwidths included in the measurement object.

Further, the electronic device 101 may select the measurement object including information of the node that supports the bandwidth of the largest size among one or more measurement objects in response to the identity of the service type included in the paging message (or indicator) and the third service type.

In step 903, the electronic device 101 may measure the quality of the signal by using the selected measurement object.

The electronic device 101 may select the measurement object including the information of the node supporting the bandwidth equal to or larger than the designated size or the measurement object including the information of the node supporting the bandwidth of the largest size, and may measure the quality of the signal based on the selected measurement object.

The electronic device 101 may measure the quality of the signal being broadcasted by the node included in the selected measurement object by controlling the communication circuit 610 to be able to receive the signal of the frequency band being used by the node and receiving the signal of the frequency band being used by the node. In order to induce the connection between the node that is the object of the measurement of the quality of the signal and the electronic device 101, the communication processor 620 may transmit the measurement report including the measured quality to the cellular network 500. The electronic device 101 may be connected with the node having the large bandwidth through the above-described method, and may smoothly perform the service having a relatively large traffic of the data to be transmitted or received.

In step 904, the electronic device may measure the quality of the signal using all the received measurement objects based on that the service type in the paging message is not the same as the third service type (step 901-N).

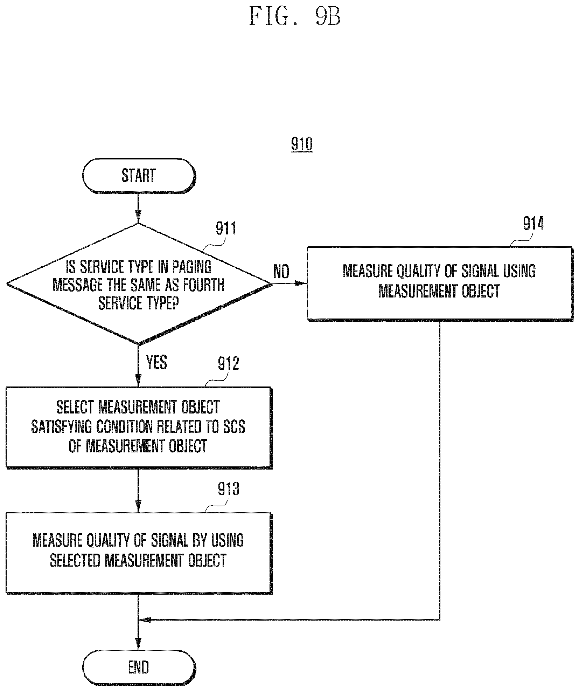

FIG. 9B is a diagram illustrating an embodiment in which an electronic device according to an embodiment identifies a measurement object satisfying a condition related to an SCS and performs measurement of a quality in case that a service type included in a paging message is the same as a predetermined third service type.

In step 911, an electronic device (e.g., electronic device 101 of FIG. 6) may identify whether a service type in a paging message is the same as a fourth service type.

The fourth service type may include a service type requiring a relatively low latency. For example, a service related to autonomous driving of a transportation means or a service related to mobile edge computing (MEC) may be the fourth service type.

In step 912, the electronic device 101 may select a measurement object that satisfies a condition related to an SCS among measurement objects based on that the service type in the paging message is the same as the fourth service type (step 911-Y).

The condition related to the SCS may include a condition supporting the SCS equal to or larger than a designated size.

The electronic device 101 may select the measurement object including information of a node that supports the SCS equal to or larger than a designated size among one or more measurement objects in response to the identity of the service type included in the paging message (or indicator) and the fourth service type. The designated size may mean the SCS capable of performing the service requiring a relatively low latency.

The condition related to the SCS may include a condition supporting the SCS having the largest size among SCSs included in the measurement object.

The electronic device 101 may select the measurement object including the information of the node supporting the SCS equal to or larger than the designated size or the measurement object including the information of the node supporting the SCS of the largest size, and may measure the quality of the signal based on the selected measurement object.

In step 913, the electronic device 101 may measure the quality of the signal by using the selected measurement object.

The electronic device 101 may measure the quality of the signal being broadcasted by the node included in the selected measurement object by controlling the communication circuit 610 to be able to receive the signal of the frequency band being used by the node and receiving the signal of the frequency band being used by the node. In order to induce the connection between the node that is the object of the measurement of the quality of the signal and the electronic device 101, the electronic device 101 may transmit the measurement report including the measured quality to the cellular network 500. The electronic device 101 may be connected with the node having the large SCS through the above-described method, and may smoothly perform the service requiring the low latency.

In step 914, the electronic device may measure the quality of the signal using all the received measurement objects based on that the service type in the paging message is not the same as the fourth service type (step 911-N).

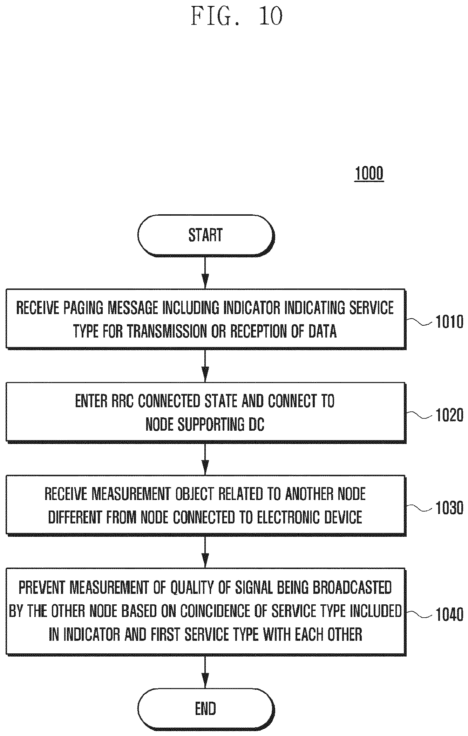

FIG. 10 is an operational flowchart illustrating a method 1000 for operating an electronic device.

In step 1010, an electronic device (e.g., electronic device 101 of FIG. 6) may receive a paging message including an indicator indicating a service type for transmission or reception of data.

A cellular network 500 may identify that the electronic device 101 is in a state in which RRC connection is released (e.g., RRC inactive state or RRC idle state), and may transmit the paging message to the electronic device 101 so that the electronic device 101 can be switched to an RRC connected state in which the electronic device 101 can receive an INVITE message.

The cellular network 500 may transmit the paging message to the electronic device 101 by using a paging channel. The paging channel is a channel that is used to periodically transmit network-related information to electronic devices connected to the first node 450, and may be a channel included in a control plane.

The cellular network 500 may include an indicator indicating a service type for data transmission and/or reception in the paging message being transmitted to the electronic device 101. The indicator may be information indicating the type of the service corresponding to the data to be received by the electronic device 101 as the electronic device 101 is switched to the RRC connected state after the reception of the paging message. According to an example, the indicator may be included in a paging cause field of the paging message. The paging cause field is a feature proposed in 3GPP TS. 36.331 or TS. 38.331 for the electronic device supporting a plurality of USIMs, and may be a field in which information on the cause of transmission of the paging message is included.

If the electronic device 101 can decode the paging cause field, the cellular network 500 may transmit the paging message including the paging cause field to the electronic device 101. Before receiving the paging message, the electronic device 101 may include information indicating that the electronic device 101 can decode the paging cause field in an attach request and/or a registration request from the cellular network 500 or the first node 450 to transmit the attach request and/or the registration request, and the cellular network 500 may identify that the electronic device 101 can decode the paging cause field based on the information indicating that the electronic device 101 can decode the paging cause field, which is included in the attach request and/or the registration request from the first node 450.

In step 1020, the electronic device 101 may enter the RRC connected state in accordance with the reception of the paging message, and may be connected to a node (e.g., first node 450 of FIG. 5A) supporting dual connectivity (DC).

The electronic device 101 may measure the quality of the signal being broadcasted by the node (e.g., first node 450) included in the cellular network 500, and if the quality satisfies a designated condition, the electronic device 101 may perform a series of operations for being connected with the first node 450, and may receive an RRC reconfiguration message from the first node 450.

In step 1030, the electronic device 101 may receive a measurement object related to another node (e.g., second node 410 of FIG. 5A) that is different from the node (e.g., first node 450 of FIG. 5A) connected to the electronic device 101.

The measurement object may include information of a node adjacent to the first node 450 that is the node connected with the electronic device 101. The measurement object may include various kinds of information including identification information of the second node 410 that is the node adjacent to the first node 450, a frequency band of a signal that can be transmitted or received by the second node 410, a frequency bandwidth of a signal that can be transmitted or received by the second node 410, and/or information of subcarrier spacing (SCS). The electronic device 101 in the RRC connected state may receive a measurement object (or measobject) included in the RRC reconfiguration message received through the first node 450. If the measurement object is included in the RRC reconfiguration message received in step 1020, the step 1030 may be omitted.

In step 1040, the electronic device 101 may prevent (or release) the measurement of the quality of the signal being broadcasted by another node based on the coincidence of the service type included in the indicator and the first service type.

The electronic device 101 may receive the paging message, and may identify the service type for transmission or reception of the data included in the paging message.

The electronic device 101 may identify whether the identified service type coincides with a designated service type.

The designated service type may mean the type of the service in which the electronic device 101 is connected to one node (or master node) (e.g., first node 450 of FIG. 5A), and is able to perform the data transmission or reception.

For example, a video call and/or a voice call may be a service for performing data transmission and/or reception through one node (or master node), and the video call and/or the voice call may be the designated service type.

As another example, a communication service without heavy data traffics may be a service capable of performing a smooth service even if the data transmission and/or reception is performed through one node (or master node), and the service without heavy data traffics may be the designated service type.

In addition, the service capable of performing the data transmission and/or reception through one node (e.g., master node) other than at least two nodes (e.g., master node and secondary node) may be the designated service type.

The electronic device 101 may identify that the indicator included in the paging message indicates the designated service type, and may prevent (or block) the measurement of the quality of the signal using the measurement object.

The prevention (or blocking) of the measurement of the quality of the signal using the measurement object may include the prevention (or blocking) of the measurement of the quality (e.g., reference signals received power (RSRP)) of the signal being broadcasted by another node (e.g., second node 410) adjacent to the first node 450 included in the measurement object and/or the prevention (or blocking) of the transmission of the measurement report including the measurement result of the quality of the signal to the first node 450.

If the service type included in the paging message is the same as the designated service type, the electronic device 101 may reduce (or prevent) power consumption that may occur due to the quality measurement of the second node 410 and/or the connection with the second node 410 by preventing (or blocking) the measurement of the quality of the signal using the measurement object even if the measurement object is received.

An electronic device according to an embodiment may include a communication processor configured to transmit or receive data to or from a network through a cellular communication. The electronic device may include a communication circuit. The communication processor may receive, from the network, a paging message including an indicator indicating a service type for transmission or reception of the data. If the paging message is received, the communication processor may enter a radio resource control (RRC) connected state, and may be connected with a node that supports dual connectivity (DC). The communication processor in the RRC connected state may receive a measurement object related to another node different from a node connected with the electronic device. The communication processor may control the communication circuit to prevent measurement of a quality of a signal being broadcasted by the other node based on the measurement object in response to identification of coincidence of a service type included in the indicator and a predetermined first service type with each other.

In the electronic device according to an embodiment, the communication processor may control the communication circuit to perform the measurement of the quality of the signal being broadcasted by the other node different from the node connected with the electronic device in the RRC connected state in response to the identification of the coincidence of the service type included in the indicator and the service type with each other.

In the electronic device according to an embodiment, the communication processor may control the communication circuit to prevent the measurement of the quality of the signal being broadcasted by the other node based on the measurement object in order to be connected with both the connected node and the other node.

In the electronic device according to an embodiment, the communication processor may control the communication circuit to perform the measurement of the quality of the signal being broadcasted by the other node in accordance with detection of transmission or reception of data corresponding to a second service type different from the predetermined service type.

In the electronic device according to an embodiment, the communication processor may receive another measurement object related to the other node different from the node connected with the electronic device as a service corresponding to the service type is ended. If an RRC release message is received from the network, the communication processor may be configured to release the prevention of the measurement of the quality of the signal being broadcasted by the other node based on the other measurement object in case of receiving an RRC release message from the network.

In the electronic device according to an embodiment, the first service type may include a type indicating a voice call service or a type indicating a video call service.

In the electronic device according to an embodiment, the indicator may be included in a paging cause field of the paging message.

In the electronic device according to an embodiment, the communication processor may select a measurement object to be used for measurement of the quality based on characteristics of a predetermined third service type in response to the identification of the coincidence of the service type included in the indicator and the predetermined third service type with each other. The communication processor may control the communication circuit to perform the measurement of the quality of the signal being broadcasted by the node included in the selected measurement object.

In the electronic device according to an embodiment, the third service type may include a type indicating a service for transmitting or receiving data of a relatively large size. The communication processor may be configured to select the measurement object including information of the node supporting a bandwidth equal to or larger than a predetermined size of the measurement object.

In the electronic device according to an embodiment, the third service type may include a type indicating a service requiring a relatively low latency. The communication processor may be configured to select the measurement object including information of the node supporting a sub-carrier spacing (SCS) equal to or larger than a designated size of the measurement object.

A method for operating an electronic device according to an embodiment may include receiving, from a network, a paging message including an indicator indicating a service type for transmission or reception of data. The method for operating an electronic device may include entering a radio resource control (RRC) connected state, and being connected with a node that supports dual connectivity (DC) if the paging message is received. The method for operating an electronic device may include receiving a measurement object related to another node different from a node connected with the electronic device in the RRC connected state. The method for operating an electronic device may include preventing measurement of a quality of a signal being broadcasted by the other node based on the measurement object in response to identification of coincidence of a service type included in the indicator and a predetermined first service type with each other.

The method for operating the electronic device according to an embodiment may further include performing the measurement of the quality of the signal being broadcasted by the other node different from the node connected with the electronic device in the RRC connected state in response to the identification of the non-coincidence of the service type included in the indicator and the first service type with each other.

In the method for operating the electronic device according to an embodiment, preventing the measurement based on the measurement object may include preventing the measurement of the quality of the signal being broadcasted by the other node based on the measurement object in order to be connected with both the connected node and the other node.

The method for operating the electronic device according to an embodiment may further include performing the measurement of the quality of the signal being broadcasted by the other node in accordance with detection of transmission or reception of data corresponding to a second service type different from the predetermined service type.

The method for operating the electronic device according to an embodiment may further include receiving another measurement object related to the other node different from the node connected with the electronic device as a service corresponding to the service type is ended. The method for operating the electronic device according to an embodiment may further include releasing the prevention of the measurement of the quality of the signal being broadcasted by the other node based on the other measurement object in case of receiving an RRC release message from the network.

In the method for operating the electronic device according to an embodiment, the first service type may include a type indicating a voice call service or a type indicating a video call service.

In the method for operating the electronic device according to an embodiment, the indicator may be included in a paging cause field of the paging message.

The method for operating the electronic device according to an embodiment may further include selecting a measurement object to be used for measurement of the quality based on characteristics of a predetermined third service type in response to the identification of the coincidence of the service type included in the indicator and the predetermined third service type with each other. The method for operating the electronic device according to an embodiment may further include performing the measurement of the quality of the signal being broadcasted by the node included in the selected measurement object.

In the method for operating the electronic device according to an embodiment, the third service type may include a type indicating a service for transmitting or receiving data of a relatively large size. Selecting the measurement object may include selecting the measurement object including information of the node supporting a bandwidth equal to or larger than a predetermined size of the measurement object.

In the method for operating the electronic device according to an embodiment, the third service type may include a type indicating a service requiring a relatively low latency. Selecting the measurement object may include selecting the measurement object including information of the node supporting a sub-carrier spacing (SCS) equal to or larger than a designated size of the measurement object.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication processor configured to transmit and/or receive data to and/or from a network through a cellular communication; and
a communication circuit,
wherein the communication processor is configured to:
receive, from the network, a paging message including an indicator indicating a service type for transmission or reception of the data,
enter a radio resource control (RRC) connected state, and be connected with a node supporting dual connectivity (DC) in case of receiving the paging message,
receive a measurement object related to another node different from a node connected with the electronic device in the RRC connected state, and
control the communication circuit to prevent the communication circuit from performing a measurement of a quality of a signal that is broadcasted by the other node based on the measurement object in response to identifying that the service type included in the indicator is same with a predetermined first service type.

2. The electronic device of claim 1, wherein the communication processor is configured to control the communication circuit to perform the measurement of the quality of the signal that is broadcasted by the other node different from the node connected with the electronic device in the RRC connected state in response to identifying that the service type included in the indicator is different from a predetermined first service type;

3. The electronic device of claim 1, wherein the communication processor is configured to control the communication circuit to prevent the communication circuit from performing the measurement of the quality of the signal that is broadcasted by the other node based on the measurement object in order to be connected with both the connected node and the other node

4. The electronic device of claim 1, wherein the communication processor is configured to control the communication circuit to perform the measurement of the quality of the signal that is broadcasted by the other node in accordance with detection of transmission and/or reception of data corresponding to a second predetermined service type different from the predetermined first service type.

5. The electronic device of claim 1, wherein the communication processor is configured to:
receive another measurement object related to the other node different from the node connected with the electronic device as a service corresponding to the service type included in the indicator is ended, and
release the prevention of the communication circuit performing the measurement of the quality of the signal that is broadcasted by the other node based on the other measurement object in case of receiving an RRC release message from the network.

6. The electronic device of claim 1, wherein the first predetermined service type comprises a type indicating a voice call service or a type indicating a video call service

7. The electronic device of claim 1, wherein the indicator is included in a paging cause field of the paging message.

8. The electronic device of claim 1, wherein the communication processor is further configured to:
select a measurement object to be used for measurement of the quality based on characteristics of a predetermined third service type in response to the identification of the coincidence of the service type included in the indicator and the predetermined third service type with each other, and
control the communication circuit to perform the measurement of the quality of the signal that is broadcasted by the node included in the selected measurement object.

9. The electronic device of claim 8, wherein the third service type comprises a type indicating a service for transmitting or receiving data of a relatively large size, and
wherein the communication processor is configured to select the measurement object including information of the node supporting a bandwidth equal to or larger than a predetermined size of the measurement object.

10. The electronic device of claim 8, wherein the third service type comprises a type indicating a service requiring a relatively low latency, and
wherein the communication processor is configured to select the measurement object including information of the node supporting a sub-carrier spacing (SCS) equal to or larger than a designated size of the measurement object.

11. A method for operating an electronic device comprising:
receiving, from a network, a paging message including an indicator indicating a service type for transmission or reception of data;
entering a radio resource control (RRC) connected state, and being connected with a node that supports dual connectivity (DC) in case of receiving the paging message;
receiving a measurement object related to another node different from a node connected with the electronic device in the RRC connected state; and
preventing measurement of a quality of a signal that is broadcasted by the other node based on the measurement object in response to identifying that the service type included in the indicator is same with a predetermined first service type.

12. The method of claim 11, further comprising performing the measurement of the quality of the signal that is broadcasted by the other node different from the node connected with the electronic device in the RRC connected state in response to identifying that the service type included in the indicator is different from a predetermined first service type.

13. The method of claim 11, wherein preventing the measurement based on the measurement object comprises preventing the measurement of the quality of the signal being broadcasted by the other node based on the measurement object in order to be connected with both the connected node and the other node.

14. The method of claim 11, further comprising performing the measurement of the quality of the signal that is broadcasted by the other node in accordance with detection of transmission and/or reception of data corresponding to a second service type different from the predetermined first service type.

15. The method of claim 11, further comprising:
receiving another measurement object related to the other node different from the node connected with the electronic device as a service corresponding to the service type included in the indicator is ended; and
releasing the prevention of the measurement of the quality of the signal being broadcasted by the other node based on the other measurement object in case of receiving an RRC release message from the network.
